(19) **Europäisches Patentamt**

**European Patent Office**

**Office européen des brevets**

(11) Veröffentlichungsnummer: **0 270 694**
**B1**

(12) **EUROPÄISCHE PATENTSCHRIFT**

(45) Veröffentlichungstag der Patentschrift:
**28.11.90**

(21) Anmeldenummer: **86115806.1**

(22) Anmeldetag: **13.11.86**

(51) Int. Cl.⁵: **B29C 49/30**, B29C 49/00,
B29C 33/36

(54) Vorrichtung zum fortlaufenden Erzeugen von Rohren mit querprofilierter Wandung.

(43) Veröffentlichungstag der Anmeldung:
**15.06.88 Patentblatt 88/24**

(45) Bekanntmachung des Hinweises auf die Patenterteilung:
**28.11.90 Patentblatt 90/48**

(84) Benannte Vertragsstaaten:
**AT BE CH DE ES FR GB GR IT LI LU NL SE**

(56) Entgegenhaltungen:
**EP-A- 0 007 556**
**DE-A- 1 918 336**
**FR-A- 993 984**
**FR-A- 2 518 011**
**US-A- 3 605 868**
**US-A- 4 365 948**

(73) Patentinhaber: **UNICOR GmbH Rahn Plastmaschinen, Industriestrasse 56, D-8728 Hassfurt(DE)**

(72) Erfinder: **Rahn, Horst, Ostpreussenstrasse 7, D-8729 Königsberg/Bayern(DE)**
Erfinder: **Grüll, Helmut, Kleinsteinach 82, D-8729 Riedbach(DE)**

(74) Vertreter: **LOUIS, PÖHLAU, LOHRENTZ & SEGETH, Kesslerplatz 1 Postfach 3055, D-8500 Nürnberg-1(DE)**

**Beschreibung**

Gegenstand der Erfindung ist eine Vorrichtung zum fortlaufenden Erzeugen von Rohren mit querprofilierter Wandung aus einem in noch plastischem Zustand aus einer Extrusionsdüse austretenden Rohrstrang aus thermoplastischem Kunststoff mit den Merkmalen des Oberbegriffs des Anspruchs 1.

Kunststoffrohre mit querprofilierter Wandung werden überwiegend in Form sogenannter Faltenrohre, Riffelrohre oder Wellrohre hergestellt, welche durch die Wellung der Wandung flexibel sind. Zur Herstellung dieser Rohre bedient man sich seit Jahrzehnten bekannter Vorrichtungen, bei denen die beiden in endlosen Bahnen geführten Folgen von Formhälften unverbunden oder verbunden umlaufen. Solche Vorrichtungen sind beispielsweise aus der US-PS 2 866 230 oder der deutschen Gebrauchsmusterschrift 1 808 897 bekannt. Bei ersterer Vorrichtung wird durch Absaugen der Luft zwischen der Wandung des Rohres und der Formhöhlung die Anschmiegung des noch plastischen Kunststoffrohres an die wandernde Hohlform bewirkt. Bei der Vorrichtung nach der genannten Gebrauchsmusterschrift wird zum gleichen Zweck im Inneren des Rohres Überdruck erzeugt.

Diese Vorrichtungen, bei denen die Formhälften abstandslos aufeinanderfolgend in ihren endlosen Bahnen geführt werden, haben sich für kleine und mittlere Rohrgrößen gut bewährt. Will man jedoch sehr große Rohre herstellen, beispielsweise Rohre mit einem Durchmesser von 25 cm oder mehr, so treten insofern Probleme auf, als die Formhälften wegen der hohen Präzision, mit der sie hergestellt werden müssen, aufwendig sind und man daher bestrebt ist, mit einer möglichst geringen Zahl von Formhälften auszukommen. Um dieses Ziel zu erreichen, kann man bei den zurückgeführt werdenden Formhälften Einsparungen machen, da diese auf ihrem Rückweg nutzlos sind. So wurde gemäß der deutschen Offenlegungsschrift 1 918 336 eine Vorrichtung entwickelt, bei welcher die Formhälften längs der Arbeitsstrecke vorgeschoben werden. Am Ende der Arbeitsstrecke werden jeweils die beiden vordersten Formhälften der Hohlform mit Hilfe von Hydraulikzylindern senkrecht zur Vorschubrichtung der wandernden Hohlform auseinanderbewegt. Dann werden die so auseinanderbewegten Formhälften mittels in Längsrichtung der Arbeitsstrecke zu beiden Seiten derselben wirkender Hydraulikzylinder zurück auf einen Stapel von Formhälften geschoben, der sich bis zum Beginn der Arbeitsstrecke erstreckt. Ist dort genügend Platz durch Wandern der Hohlform entstanden, so bewegt ein weiteres Paar von hydraulischen Zylindern das wiederum senkrecht zur Arbeitsstrecke wirkt, ein Zusammenschieben des dort am Ende der Rückführstrecke befindlichen Paares von Formhälften. Nach dem Zusammenschieben wird dieses Formhälftenpaar von einem weiteren Hydraulikzylinder wieder in Arbeitsrichtung vorgeschoben. Auf diese Weise kann man in der Tat die Zahl der erforderlichen Formhälften verringern. Die bekannte Vorrichtung weist jedoch verschiedene nicht unerhebliche Mängel auf. So müssen beispielsweise die Hydraulikzylinder zum Auseinanderschieben der Formhälften am Ende der Arbeitsstrecke und Zusammenschieben am Beginn der Arbeitsstrecke mit der Geschwindigkeit der wandernden Hohlform mitbewegt werden.

Ein weiterer wesentlicher Nachteil der bekannten Vorrichtung liegt darin, daß der von Hydraulikzylindern gebildete Rückförderer bei seinem intermittierenden Arbeiten immer einen Stapel von Formhälften beschleunigen muß, dessen Länge fast der ganzen Länge der Arbeitsstrecke entspricht, so daß hier sehr hohe Kräfte erforderlich sind. Nach dem Zurückschieben dieses Stapels von Formhälften muß dieser lange Stapel mit seiner hohen Masse auch wieder abgebremst werden, was ebenfalls Schwierigkeiten bereitet. Dennoch ist diese bekannte Vorrichtung dem Grunde nach funktionsfähig. Sie wurde auch in der Praxis gebaut.

Um eine Vorrichtung mit den Merkmalen des Oberbegriffs des Anspruchs 1 insbesondere dahingehend weiterzubilden, daß eine Rückführeinrichtung ermöglicht wird, die bei geringem Bauaufwand, geringer Geschwindigkeit und geringen Massenkräften nur wesentlich weniger Formhälften enthält als die bekannte Vorrichtung, bildet die Erfindung eine Vorrichtung gemäß dem Oberbegriff des Anspruchs 1 dahingehend weiter, daß die Förderer jeweils unterhalb der Unterlage ein endloses Zugglied mit einem in Förderrichtung des jeweiligen Förderers umlaufenden Trum besitzen, daß die Zugglieder Mitnehmer tragen, die am Beginn des Förderweges mit den Formhälften in Eingriff kommen, diese mitnehmen und am Ende des Förderweges wieder außer Eingriff mit den Formhälften kommen können, und daß Führungsleisten zum Parallelführen der Formhälften im Bereich der Rückführeinrichtung vorgesehen sind.

Einen Weg, um mit einer Minimalanzahl von Formhälften auszukommen, beschreibt und zeigt zwar auch die europäische Patentschrift 0 007 556. Bei dieser Patentschrift fährt jeweils neben der Arbeitsstrecke ein Wagen hin und her, welcher mittels eines Gestänges Greifer trägt. Die Greifer können am Ende der Arbeitsstrecke jeweils eine Formhälfte erfassen, sie zur Seite von der Arbeitsstrecke wegbewegen, worauf dann der Wagen mit der Formhälfte an den Anfang der Arbeitsstrecke zurückfährt und dort durch entsprechendes Verschwenken des Gestänges die Formhälfte wieder an den Beginn der Arbeitsstrecke ansetzt. Dieses Prinzip erscheint bestechend, es hat jedoch den wesentlichen Nachteil, daß eine sehr schwere Konstruktion erforderlich wird, da in der kurzen Zeit, in der die wandernde Hohlform die Länge einer einzigen Formhälfte zurücklegt, eine Formhälfte jeweils aus dem Bereich der Hohlform gebracht, zurück und wieder in den Bereich der Hohlform hineingebracht werden muß. Dies führt nicht nur zu sehr hohen Massenkräften, die noch dadurch erhöht werden, daß der Schlitten und das Gestänge äußerst massiv sein müssen, um während der Abhebe-, Rück- und Wiederansetzbewegung die Formhälfte frei tragen zu können.

Diese Probleme treten bei der Erfindung nicht auf, da bei der Erfindung sich stets mehrere Formhälften zugleich auf dem Rückfuhrweg befinden, so daß man hier mit kleinen Geschwindigkeiten auskommt und darüber hinaus die schweren hin und her bewegten Massen des Gerätes nach dem erwähnten europäischen Patent nicht erforderlich sind. Die Förderer, mit denen die Erfindung auskommt, sind leicht und einfach und können kontinuierlich umlaufen, und das mit einer an den Geschwindigkeiten, die bei einem Gerät nach der E-PS 0 007 556 auftreten, gemessen, sehr geringen Geschwindigkeit.

Will man die Vorrichtung nach der Erfindung, wie dies in höchstem Maße wünschenswert ist, entfeinern, so kann man die für die Antriebe Führungen und dgl. erforderliche Präzision wesentlich verringern, wenn man gemäß Anspruch 2 die Positionen neben dem Anfang und Ende der Arbeitsstrecke als Wartepositionen ausbildet, in welchen die Formhälften vom Rückförderer bzw. Querförderer stehengelassen werden, bevor sie kurzzeitig danach vom Querförderer bzw. Rückförderer erfaßt und dem Anfang der Hohlform bzw. der Position neben dem Anfang der Arbeitsstrecke zugeführt werden. Zum Abbremsen der Formhälften in diesen Warptepositionen genügt in der Regel die Reibungskraft zwischen der Formhälfte und der Unterlage.

Die Zugglieder sind bevorzugt Ketten. Dem Grunde nach ist es aber auch möglich, als Zugglieder beispielsweise entsprechend hochfeste Zahnriemen einzusetzen, diese bringen sogar wegen ihrer Elastizität noch Vorteile für die Beschleunigungsvorgänge am Beginn jedes Förderers mit sich. Wegen der höheren Standfestigkeit werden jedoch Ketten bevorzugt (Anspruch 3).

Will man mit besonders einfachen Führungselementen im Bereich der Querförderer auskommen, so kann man gemäß Anspruch 4 die Mitnehmer der Querförderer als senkrecht zur Förderrichtung derselben, also parallel zur Arbeitsstrecke verlaufende Leisten ausbilden, welche mit entsprechend verlaufenden Anschlagflächen der Formhälften zusammenwirken und letztere während des Querförderweges in ihrer Parallellage führen. Ein besonderer Vorteil dieser Leistenausbildung liegt darin, daß so lange wie die entsprechenden Formhälften am Ende der Arbeitsstrecke noch im Eingriff mit der wandernden Hohlform und am Beginn der Arbeitsstrecke bereits im Eingriff mit der wandernden Hohlform sind, ein Verschieben der Formhälften in Wanderrichtung der Hohlform der Förderung durch die Querförderer ohne weiteres überlagert werden kann, da die Formhälften längs der erwähnten Leisten in Längsrichtung dieser Leisten gleiten können.

Damit bei geringem baulichem Aufwand die Mitnehmer der Querförderer am Ende der Arbeitsstrecke an der Unterseite der zunächst noch zur wandernden Hohlform gehörenden Formhälften angreifen und andererseits am Beginn der Arbeitsstrecke die Querförderer nicht mit dem in der Regel dort befindlichen Antrieb für die wandernde Hohlform kollidieren, können gemäß Anspruch 5 die Mitnehmer der Querförderer am Ende der Arbeitsstrecke mit den Flanken von an den Unterseiten der Formhälften vorgesehenen Nuten und die Mitnehmer der Querförderer am Anfang der Arbeitsstrecke mit den der Hohlform abgewandten Oberflächen der Formhälften zusammenwirken.

Da die Querförderer recht kurz sind im Verhältnis zu den Rückförderern, ist die ihren Zuggliedern eigene Elastizität besonders gering. Man wird daher zur Erzielung größtmöglicher Arbeitsgeschwindigkeiten und zur Beherrschung auch sehr großer Formhälften vorteilhaft die Mitnehmer wenigstens der Querförderer in Förderrichtung elastisch nachgebend an ihren Zuggliedern befestigen (Anspruch 6).

Dem Grunde nach kann man die Formhälften im Bereich der Rückförderer beispielsweise dadurch führen, daß man die Formhälften dort in formschlüssigem Eingriff mit entsprechend geformten Mitnehmern der Zugglieder führt.

Besonders einfach wird die Konstruktion jedoch dann, wenn gemäß Anspruch 7 die Formhälften im Bereich der Rückförderer an in Förderrichtung verlaufenden Führungsleisten der Unterlagen geführt sind. Zu diesem Zweck kann man die oben in Anspruch 5 erwähnten Nuten an der Unterseite der Formhälften auf den sie im wesentlichen ausfüllenden Führungsleisten der Unterlagen führen. Auf diese Weise kommt man mit einer einzigen Führungsleiste zur sicheren Führung aus.

Um ein genaues Abbremsen der Formhälften am jeweiligen Ende des Förderweges, also in den Warptepositionen zu ermöglichen (die Formhälfte muß ja dem nächsten Förderer so dargeboten werden, daß sein Mitnehmer die Vorrichtung sicher in der richtigen Lage ergreifen kann) ist eine nicht unerhebliche Präzision in Aufbau und Bemessung des entsprechenden Förderers möglich. Das läßt sich vermeiden, wenn man gemäß Anspruch 8 jeweils am Ende des Förderweges (ausgenommen am Beginn der Hohlform), also an den Warptepositionen Positionieranschläge für die Formhälften vorsieht. Diese Positionieranschläge können vorteilhaft als einfache nach oben ragende Rippen auf der Unterlage ausgebildet sein, wobei diese Rippen dann jeweils sich senkrecht zur Förderrichtung des Förderers (die nicht immer mit der Bewegungsrichtung der Formhälfte während der Förderung durch den Förderer übereinstimmt) erstrecken. Diese Positionieranschläge können erforderlichenfalls auch noch durch am Ende der Bewegung der Formhälfte vorgesehene Führungsleisten ergänzt werden, welche die Formhälften am Ende ihrer Förderung durch den jeweiligen Förderer in Längsrichtung desselben führen.

Um ein sicheres Einführen der Formhälften am Beginn der Arbeitsstrecke in ihre Lage an der wandernden Hohlform zu gewährleisten, können beispielsweise zusätzliche Führungselemente etwa in Form von Führungsrippen auf der Unterlage vorgesehen sein, welche mit entsprechenden Nuten an der Unterseite der Formhälften zusammenwirken. Auch wenn an der Unterseite der Formhälften, die normalerweise für deren Antrieb im Bereich der Arbeitsstrecke erforderliche Verzahnung vorgesehen ist, können derartige Führungsnuten quer zu der Verzahnung verlaufend angeordnet werden. Wesentlich einfacher und günstiger wird die Ausbildung jedoch, wenn gemäß Anspruch 9 die Formhälften jeder Folge an ihren in der Arbeitsstrecke an der vorauseilenden und der nacheilenden Formhälfte anliegenden Stirnflächen ineinandergeschobene komplementär geformte Querrippen bzw. -nuten tragen, welche die Formhälften jeder Folge während des Zusammenschiebens am Beginn der Arbeitsstrecke an der in der Arbeitsstrecke starr geführten Hohlform führen. Durch entsprechende Anschrägung an diesen Führungsrippen und Nuten an den Stirnflächen der Formhälften kann ein sicheres Einfädeln derselben ineinander am Beginn der Arbeitsstrecke erleichtert werden.

In konstruktiver Hinsicht ist die Ausbildung gemäß Anspruch 10 vorteilhaft so getroffen, daß die 4 Querförderer gleich ausgebildet sind, daß die Querförderer am Beginn der Arbeitsstrecke um ein dem Abstand der Nuten an der Unterseite der Formhälften von den der Hohlform abgewandten Seitenflächen der Formhälften entsprechendes Maß weiter seitlich von der Arbeitsstrecke ab liegen als die Querförderer am Ende der Arbeitsstrecke, daß die an den in Arbeitsrichtung vorderen Stirnflächen der Formhälften mit ihren Mitnehmern angreifenden Rückförderer in geringerem seitlichem Abstand von der Arbeitsstrecke angeordnet sind als die der Arbeitsstrecke abgelegenen Umlenkräder der Querförderer am Beginn der Arbeitsstrecke, daß der jeweils am Ende der Arbeitsstrecke liegende Anfang der Rückförderer weiter vom zugehörigen Querförderer am Beginn der Arbeitsstrecke ab liegt als der Querförderer am Ende der Arbeitsstrecke, und daß letzterer zwischen der Arbeitsstrecke und dem zugehörigen Querförderer liegt.

Eine solche Anordnung vermeidet die zunächst zu befürchtende Kollision der verschiedenen Förderer.

Wenn, wie dies bevorzugt wird, gemäß Anspruch 11 die wandernde Hohlform mittels einer am Anfang der Arbeitsstrecke angeordneten Zahnradwelle angetrieben wird, die mit einer Verzahnung an der Unterseite der Formhälften zusammenwirkt, können die Querförderer am Ende der Arbeitsstrecke vorteilhaft dadurch angetrieben werden, daß die Verzahnung der Formhälften über eine Zahnradanordnung am Ende der Arbeitsstrecke die dortigen Querförderer antreibt. Auf diese Weise ist auch eine einwandfreie Synchronisierung gewährleistet. Die anderen Förderer werden vorteilhaft über Zwischengetriebe durch die Zahnradwelle angetrieben.

Die Vorrichtung nach der Erfindung läßt sich besonders vorteilhaft so weiterbilden, daß Einzelrohre mit über der Länge unterschiedlichem Profil mit mehr unterschiedlichen Längen als bisher möglich, ohne Abfall oder Erzeugung an sich nicht gewünschter kurzer Rohrlängen hergestellt werden können. Oft ist es erforderlich, daß Rohre mit endlicher Länge hergestellt werden, die über ihre Länge nicht das gleiche Profil haben, also beispielsweise Wellrohre, die an einem Ende oder an beiden Enden mit Muffen versehen sind. Derartige Rohre können mit den bekannten Maschinen hergestellt werden, indem man beispielsweise in jedem fünften Paar von Formhälften die Profilierung so ändert, daß dort eine Muffe entsteht und den entstehenden Rohrstrang an den entsprechenden Stellen zerschneidet. Hierbei lassen sich ohne Abfall jedoch nur solche Rohre herstellen, deren Gesamtlänge gleich der Gesamtlänge aller Formhälften in jeder der beiden Formhälftenfolgen ist. Ist also beispielsweise ein Rohr erwünscht, dessen Gesamtlänge gleich der Länge von zwei Dritteln der Formhälften einer Formhälftenfolge ist, so entstehen gleichzeitig gewissermaßen als Abfall weitere Rohre mit, deren Gesamtlänge gleich einem Drittel der Gesamtlänge einer Folge ist. Man ist auf diese Weise in der Herstellung von Rohren, welche über ihre Länge ungleich profiliert sind, mit einem bestimmten Formhälftensatz sehr beschränkt.

Die Erfindung vermeidet diesen Mangel dadurch, daß sie gemäß Anspruch 12 die Rückführeinrichtungen für die Aufnahme und den Transport unterschiedlicher Zahlen von Formhälften ausbildet. Dadurch können z.B. wahlweise zehn oder 12 Formhälften in jeder Folge umlaufen, ohne daß die Zahl von z.B. sieben bis acht Formhälftenpaaren in der Arbeitsstrecke geändert wird.

Verringert man also die Zahl der auf jedem Rückförderer befindlichen Matrizenhälften beispielsweise um 2, so kann man neben Rohren mit einer Gesamtlänge von 12 Matrizen auch Rohre mit einer Gesamtlänge von 10 Matrizen herstellen. Auf diese Weise wird die Anwendung der Vorrichtung, wie ohne weiteres ersichtlich, außerordentlich flexibel.

Wenn bei einer Vorrichtung nach der Erfindung bei der Rückführung der Formhälften diese jeweils im Abstand voneinander aufeinanderfolgend vom Rückförderer gefördert werden, so hat das den wesentlichen Vorteil, daß der Rückförderer kontinuierlich arbeiten kann und daß nicht die gesamte Masse der auf dem Rückförderer befindlichen Matrizenhälften gleichzeitig beschleunigt und abgebremst werden muß. In diesem Falle muß vielmehr, wenn sich beispielsweise 3 Matrizen auf dem Rückförderer befinden, lediglich die vorderste, also die im Bereich des Beginns der Arbeitsstrecke befindliche Matrizenhälfte abgebremst werden, während nur eine weitere 4. Matrizenhälfte am Beginn der Rückförderstrecke, also am Ende der Arbeitsstrecke, vom Rückförderer wieder auf die Rückfördergeschwindigkeit beschleunigt werden muß.

Will man die Vorrichtung gemäß dem Anspruch 12 ausbilden, so kann dies in besonders vorteilhafter Weise dadurch geschehen, daß gemäß Anspruch 13 das Verhältnis der Umlaufgeschwindigkeit der Rückförderer zu der der Querförderer einstellbar ist und daß die Mitnehmer jedes Rückförderers in unterschiedlicher Zahl und unterschiedlichem Abstand auf dessen Zugglied befestigbar, oder aber in unterschiedlichen Anzahlen von Formhälften entsprechenden Abständen auf den Zuggliedern sitzen.

Eine einwandfreie Synchronisierung der verschiedenen Förderer mit dem Antrieb der Hohlform wird besonders vorteilhaft gemäß Anspruch 14 dadurch erreicht, daß bei einer Vorrichtung, bei welcher die Hohlform mittels einer am Anfang der Arbeitsstrecke angeordneten Zahnradwelle angetrieben wird, die mit einer Verzahnung an der Unterseite der Formhälften zusammenwirkt, ein gemeinsam und synchron mit der Zahnradwelle angetriebenes Schalt-Getriebe die Zugglieder der Rückförderer mit wählbarer Geschwindigkeit antreibt, während die Querförderer in unveränderbarem Übersetzungsverhältnis zur Zahnradwelle angetrieben sind. Dadurch kann die Fördergeschwindigkeit des Rückförderers an unterschiedliche Zahlen von im Rückförderbereich befindlichen Formhälften angepaßt werden. Bei den Querförderern ist eine solche Anpassung nicht erforderlich.

Dadurch wird es erreicht, daß, wenn beispielsweise die Zahl der jeweils zugleich auf dem Rückförderer befindlichen Formhälften von 4 auf 2 reduziert wird, die Geschwindigkeit des Rückförderers verdoppelt werden kann. Um nicht für jede Anzahl von Formhälften ein gesondertes Zugglied verwenden zu müssen, was natürlich ebenfalls möglich ist, (der Aufwand für das Zugglied, das normalerweise eine Laschenkette ist, ist äußerst gering) kann man die Mitnehmer am Zugglied jedes Rückförderers in den gewünschten und rechnerisch leicht feststellbaren Abständen anordnen. So kann beispielsweise bei Ausbildung als Laschenkette immer jeweils ein Kettenglied den entsprechenden Mitnehmer tragen. Will man sich auch das ersparen und sollen beispielsweise nur zwei verschiedene Rohrlängen mit über der Länge unterschiedlicher Profilierung erzeugt werden, so kann es in manchen Fällen ausreichend sein, wenn man für beide Rohrlängen, also für beide Zahlen von gleichzeitig auf dem Rückförderer befindlichen Formhälften die erforderlichen Mitnehmer auf der Kette anbringt. In diesem Falle muß natürlich darauf geachtet werden, daß die jeweils nicht benötigten Mitnehmer nicht mit den von den benötigten Mitnehmern mitgeführten Formhälften kollidieren. Läßt sich letzteres nicht vermeiden, bleibt nichts anderes übrig, als die Mitnehmer, die nicht benötigt werden und kollidieren würden, zu entfernen.

In der Anwendung auf die Maschine nach der DE-OS 1 918 336 genügt es z.B., aus jedem Rückförderer 2 Matrizenhälften herauszunehmen. Allerdings muß hierbei auch der Hub der die Rückförderung bewirkenden Hydraulikzylinder entsprechend vergrößert werden. Es besteht aber auch die Möglichkeit, die entsprechenden Hydraulikzylinder auf einem Schlitten verfahrbar anzuordnen, so daß zum Zurückbewegen der gerade am Ende der Arbeitsstrecke angekommenen Formhälften nicht nur der die Zurückbewegung bewirkende Hydraulikzylinder seinen Kolben ausfährt, sondern darüber hinaus auch noch selbst zurück in Richtung des Beginns der Arbeitsstrecke gefahren wird. Regelt man die Rückführbewegung hierbei noch so, daß in einem Hub die ganze Säule von Formhälften zurückgefahren wird und erst in einem nachfolgenden Hub die gerade von dem Ende der Hohlform abgezogenen Formhälften wieder an die Säule herangeschoben werden, so wird dadurch auch noch die zu bewegende maximale Masse verringert.

Die Rückförderung der Formhälften im Abstand kann hierbei beispielsweise bewirkt werden, in dem bei der bekannten Vorrichtung nach der DE-OS 1 918 336 die von den Rückförderhydraulikzylindern über der Unterlage einfach geschobenen Matrizenhälften ihre Rückwärtsbewegung auf umlaufenden Förderbändern ausführen, wobei dann der die Rückförderung bewirkende Hydraulikzylinder den vom Querförderhydraulikzylinder die vom Querförder hydraulikzylinder vom Ende der Arbeitsstrecke abgezogene Formhälfte nur noch ein kurzes Stück auf das Förderband aufschieben muß, welches die Formhälfte dann zurückfördert. Man erkennt, daß bei einem solchen Vorgehen eine ganze Säule von auf der Rückförderstrecke befindlichen Formhälften nicht mehr erforderlich ist. Man kommt vielmehr mit einer sehr geringen Zahl von Formhälften auf der Rückförderstrecke aus, so daß durch diese erfindungsgemäße Ausbildung eine weitere Einsparung an Formhälften erreicht wird.

Am Ende der Rückförderstrecke, also am Beginn der Arbeitsstrecke kann dann die Formhälfte vom Förderband wieder auf einen Tisch aufgeschoben werden, wo sie durch Reibung abgebremst wird und beispielsweise gegen einen Anschlag anläuft. Dieser Anschlag richtet die Formhälfte dann auch so weit aus, daß nun der hier befindliche Querförderer mittels eines Hydraulikantriebes die Formhälfte wieder mit der korrespondierenden Formhälfte der gegenüberliegenden Form zur Hohlform zusammenschieben kann. Auf diese Weise erlaubt die Maschine auch einen wesentlich leichteren einfacheren und sicherer wirkenden Aufbau der Vorrichtung.

Nachfolgend ist die bevorzugte Ausführungsform der Erfindung anhand der beigefügten Zeichnungen als erläuterndes Beispiel beschrieben.

Figur 1 zeigt stark vereinfacht in perspektivischer Darstellung den Grundaufbau der Vorrichtung nach der Erfindung.

Figur 2 zeigt die Ansicht von oben auf die bei der Vorrichtung nach Figur 1 verwendete, im wesentlichen unter der in Figur 1 gezeigten, die Unterlage bildenden Grundplatte angeordnete Antriebseinrichtung.

Figur 3 zeigt stark schematisiert einen Vertikalschnitt durch die Vorrichtung nach der Erfindung, wobei nicht alle Teile gezeigt sind und in der rechten Hälfte der Querförderer am Beginn der Arbeitsstrecke und in der linken Hälfte der Querförderer am Ende der Arbeitsstrecke dargestellt ist.

Figur 4 zeigt in gegenüber Figur 3 vergrößertem Maßstab die nachgiebige Anordnung des Mitnehmers an einem der Querförderer, wobei die Ansicht der Darstellung in Figur 3 entspricht.

Figur 5 zeigt die Ansicht auf ein Formhälftenunterteil der in Figur 1 linken Formhälftenfolge vom Ende der Arbeitsstrecke her betrachtet.

Figur 6 zeigt die Ansicht von rechts auf Figur 5.

Figur 7 zeigt die Ansicht von oben auf Figur 6.

Die Figuren 8A bis 8I zeigen jeweils in der oberen Hälfte eine Vorrichtung nach der Erfindung mit 12 Formhälften in verschiedenen aufeinanderfolgenden Umlaufpositionen und in der unteren Hälfte die gleiche Vorrichtung mit um 2 auf 10 Formhälften verringerter Formhälftenzahl in den entsprechenden Umlaufpositionen.

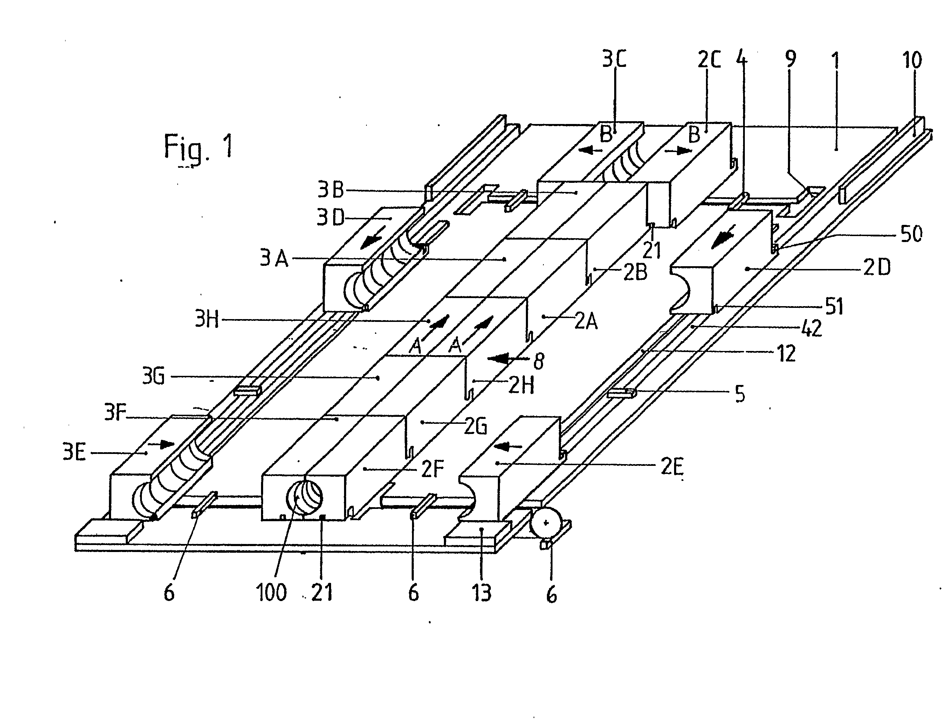

Die Vorrichtung nach der Erfindung, die in Figur 1 stark schematisiert dargestellt ist, besitzt eine waagerechte Grundplatte 1, auf welcher die Formhälften 2A bis 2H der in der durch Pfeile angedeuteten Umlaufrichtung umlaufenden rechten Formhälftenfolge, sowie die entsprechenden Formhälften 3A bis 3H der linken Formhälftenfolge der Einfachheit halber als rechteckige Blöcke mit entsprechenden halbzylindrischen Aussparungen dargestellt sind, wobei diese halbzylindrischen Aussparungen einander längs der Arbeitsstrecke, also längs des Weges, in dem die beiden Formhälftenfolgen zu der in der Mitte gezeigten geschlossenen, in Pfeilrichtung wandernden Hohlform 8 zusammengefügt sind, zu einem innen in Umfangsrichtung gewellten rohrförmigen Formkanal 6a ergänzen.

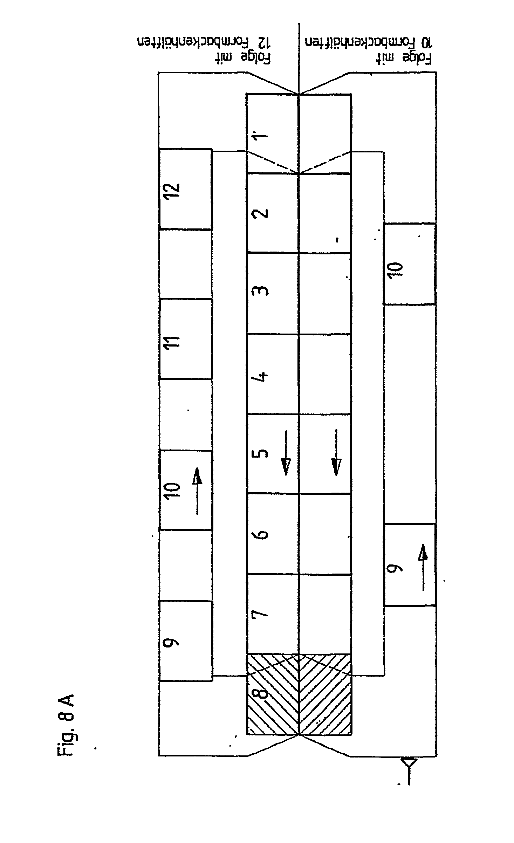

In Figur 1 ist die Position der einzelnen Formhälften 2A bis H und 3A bis H nicht exakt dargestellt. Die exakten Positionen für ein Ausführungsbeispiel sind aus den Figuren 8A bis 8I ersichtlich. Ebenso ist die Position der Mitnehmer 4, 5 und 6 der Querförderer 7, 15 und der Rückförderer 11 nicht korrekt gezeigt, um eine Darstellung dieser Elemente auch in Figur 1 zu ermöglichen. Für das Verständnis der Erfindung kommt es jedoch insoweit auf eine exakte Darstellung nicht an. In Figur 1 tritt das noch weiche thermoplastische Rohr am dem Beschauer zugekehrten Ende koaxial in den Formkanal 6a der wandernden Hohlform 8 ein, die hier aus den Formhälften 2A, B, F, G und H, sowie 3A, B, F, G und H gebildet ist. Am dem Beschauer abgewandten Ende, wo die beiden Formhälften 2C und 3C schon ein Stück auseinandergefahren sind, also am Ende der Arbeitsstrecke, tritt der nicht gezeigte, nun geformte und durch Abkühlung gehärtete Rohrstrang wieder aus.

Wie bereits ein Blick auf Figur 1 zeigt, wandert die Hohlform 8 in Richtung des Pfeiles A um am dem Betrachter abgelegenen Ende wieder aufgelöst zu werden, während am dem Betrachter zugekehrten Ende die Hohlform laufend durch wieder Zusammenführen neuer Formhälftenpaare (als nächstes wird hier das Formhälftenpaar 2E und 3E an den Beginn der Hohlform wieder angesetzt) wieder auf die ursprüngliche Länge gebracht zu werden.

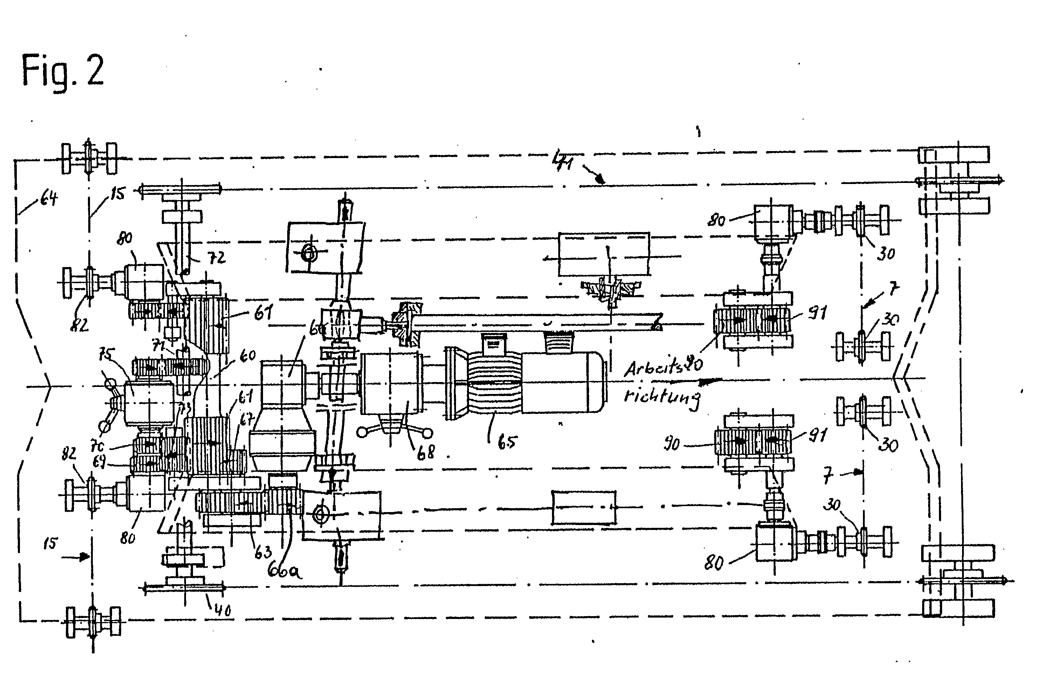

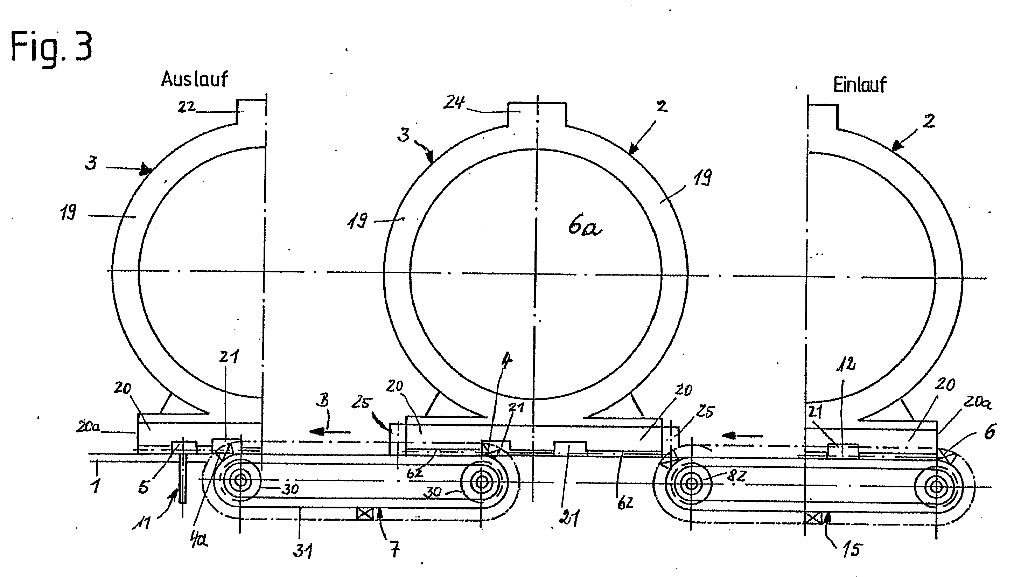

Am dem Beschauer in Figur 1 abgelegenen Ende der Arbeitsstrecke werden jeweils die ankommenden Formhälften von den Mitnehmern 4 der dort befindlichen, nicht in Figur 1 sondern erst in Figur 2 und 3 gezeigten Querförderer 7 erfaßt und in Richtung der Pfeile B auseinandergeschoben.

Wenn nach dieser Auseinanderschiebebewegung, der zum Beginn noch eine Bewegung in Wanderrichtung der Hohlform 8 überlagert ist, die Mitnehmer 4 durch entsprechende Öffnungen 9 der Grundplatte 1 nach unten abtauchen, kommen die jeweils dort auseinandergeführten Formhälften aufgrund der Reibung auf der Grundplatte 1 schnell zum Stehen. Ihre genaue Position wird durch Anlaufen der Formhälften gegen entsprechende Positionieranschläge 10 gewährleistet.

Aus der Position an dem Positionieranschlag 10 wird nun die entsprechende Formhälfte mit Hilfe des Mitnehmers 5 des entsprechenden Rückförderers 11 erfaßt und parallel zur Arbeitsstrecke auf einer Führungsleiste 12 gleitend bis zur Höhe des Beginns der Arbeitsstrecke wieder zurückgefahren. Dort kommt die entsprechende Formhälfte in der Position der Formhälfte 2E zum Stehen, wo sie durch einen weiteren Positionieranschlag 13 ausgerichtet wird. Aus dieser Position wird nun die entsprechende Formhälfte durch einen von außen an sie herangeführten Mitnehmer 6 des Querförderers 15 am Beginn der Arbeitsstrecke erfaßt und senkrecht zur Bewegung der wandernden Hohlform 8 auf diese zugeschoben, bis sie von letzterer erfaßt und beim letzten Teil des Zusammenführens in später zu erläuternder Weise geführt in die korrekte Position in der wandernden Hohlform gebracht ist. In dieser Position sind in Figur 1 die beiden Formhälften 2F und 3F dargestellt. Nun bilden die beiden Formhälften 2F und 3F wieder den Beginn der wandernden Hohlform und alsbald wird das nächste Formhälftenpaar – in Figur 1 die Formhälften 2E und 3E – angefügt, während am Ende der Arbeitsstrecke weitere Formhälften wieder entfernt und zurückgeführt werden.

Die Formhälften 2A und 2H sind spiegelbildlich zu den Formhälften 3A bis 3H aufgebaut. Es werden daher nachfolgend nur die Formhälften der Folge 3 beschrieben.

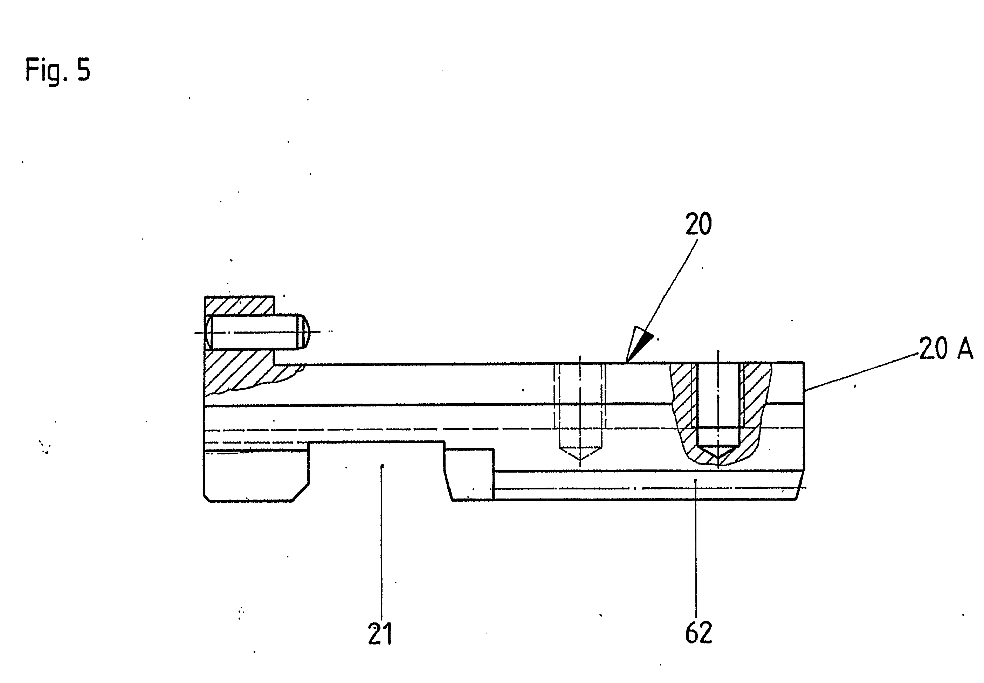

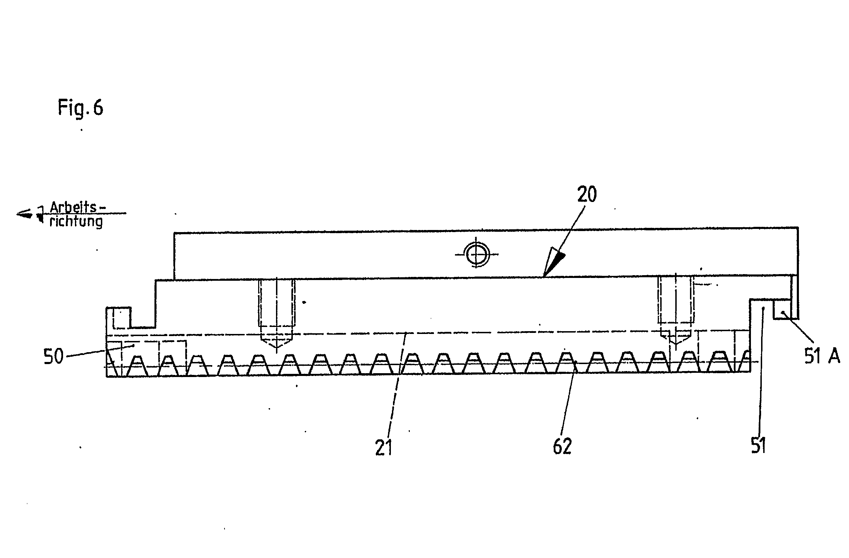

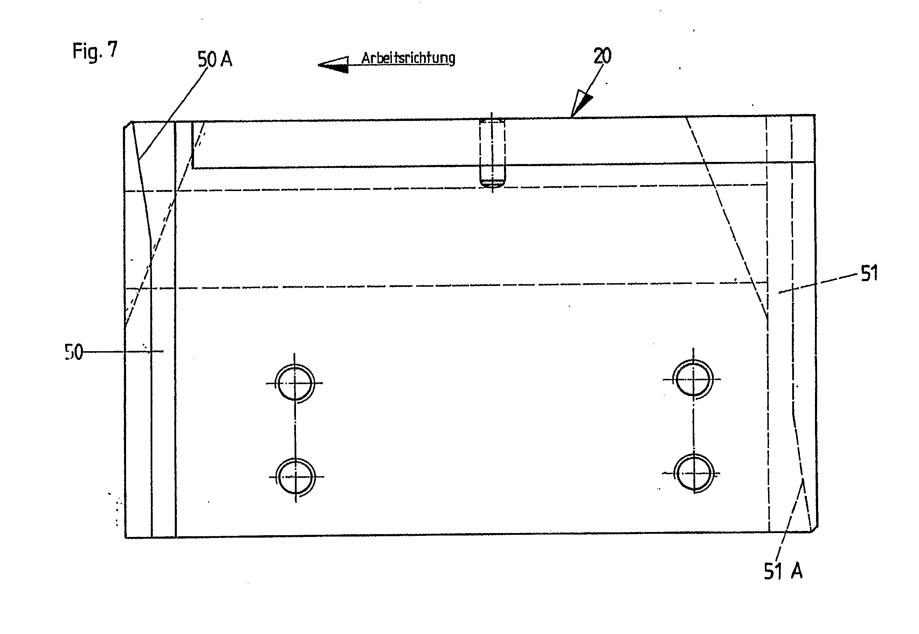

Jede Formhälfte 3A bis 3H der Formhälftenfolge 3 besitzt ein Formhälftenunterteil 20, von denen eines in größerem Maßstab in Figur 5 bis 7 gezeigt ist. Auf dem Formhälftenunterteil 20 ist das Formhälftenoberteil 19 mittels nicht gezeigter Schrauben in der aus Figur 3 ersichtlichen Position befestigt. Das Formhälftenoberteil 19 bildet zusammen mit dem entsprechenden Oberteil der gegenüberliegenden Formhälfte im Bereich der Arbeitsstrecke den Formkanal 6a (Figur 3 Mitte). Das Formhälftenoberteil 19 hat im wesentlichen die Form einer Halbzylinderschale, die an der Oberseite eine Randrippe 22 besitzt. Die Randrippen der beiden Formhälften jedes Formhälftenpaares sind auf der Arbeitsstrecke oben mittels einer Führung 24 geführt, die lediglich in Figur 3 dargestellt ist. Die Formhälften sind auf der Grundplatte 1 (Figur 3) verschiebbar. Im Bereich der Arbeitsstrecke sind die beiden Formhälftenfolgen nicht nur an der Oberseite mittels ihrer Randrippen 22, sondern auch im Bereich der Grundplatte 1 geführt, wo zu diesem Zweck zwei Führungsrippen 25 vorgesehen sind (Fig. 3). Im Bereich der Arbeitsstrecke gleiten die Formhälften unterteile 20 jeweils mit ihren einander abgewandten vertikalen Seitenwänden an diesen Führungsrippen 25 anliegend, so daß auch der im Inneren des im Formkanal 6a befindlichen, noch thermoplastisch verformbaren Kunststoffrohres herrschende Überdruck die Formhälften 2, 3 nicht auseinanderdrücken kann. In Richtung der Arbeitsstrecke erstrecken sich die Führungsrippen 25 in Figur 1 etwa vom Beginn des Formhälftenpaares 2G und 3G bis zur Mitte des Formhälftenpaares 2B und 3B. Sie müssen frühzeitig genug enden, damit am Ende der Arbeitsstrecke die Formhälften auseinandergefahren werden können und dürfen auch erst so spät anfangen, daß vor ihrem Beginn das Zusammenschieben der Formhälften am Beginn der Arbeitsstrecke beendet ist.

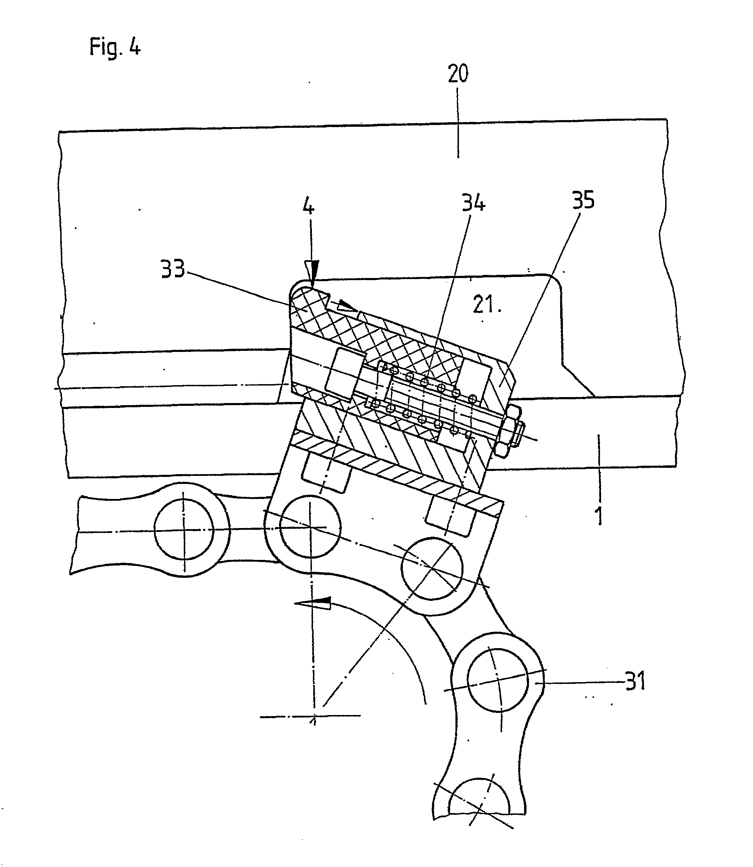

Zum Auseinanderschieben der Formhälften 2, 3 (wenn die Formhälften allgemein beschrieben werden, wird nachfolgend der die jeweilige Formhälfte kennzeichnende Buchstabe weggelassen) dienen die beiden am Ende der Arbeitsstrecke vorgesehenen Querförderer 7. Jeder Querförderer 7 wird im wesentlichen von zwei Kettenrädern 30, einer über diese geführten Kette 31 und einem auf der Kette 31 befestigten Mitnehmer 4 gebildet. Jeder Mitnehmer 4 besteht aus einer Kunststoffleiste 33, die sich in Figur 3 und 4 senkrecht zur Zeichenebene über eine Länge erstreckt, die etwa gleich einem Viertel der Länge jeder Formhälfte in Arbeitsrichtung ist. Die Leiste erstreckt sich also parallel zur Wanderrichtung der Hohlform 8. Sie ist quer zu ihrer Längserstreckung gegen die Wirkung einer Feder 34 elastisch verschiebbar in einem Leistenhalter 35 in der aus Figur 4 ersichtlichen Weise gelagert. Der Halter 35 ist wiederum, wie ebenfalls aus Figur 4 ersichtlich, an einem Glied der Kette 31 befestigt. Die Ketten 31 der Querförderer 7 am Ende der Arbeitsstrecke laufen in senkrecht zur Wanderrichtung der Hohlform verlaufenden Ebenen um. Ihre Lage ist aus Fig. 2 und 3 ersichtlich. Jede Leiste 33 des Mitnehmers 4 eines Querförderers 7 ist an ihrer mit der entsprechenden Formhälfte 2, 3 in Eingriff kommenden Vorderkante angeschrägt, wie dies ebenfalls aus Figur 3 und 4 ersichtlich ist. Zum Auseinanderfahren der Formhälften taucht im Bereich des entsprechenden Kettenrades 30 beim Umlauf der Kette um dieses der Mitnehmer 4 durch einen entsprechenden Schlitz in der Grundplatte 1 unter der Hohlform 8 nach oben über die Grundplatte 1 und tritt dort in eine an der Unterseite des entsprechenden Formhälftenunterteils 20 vorgesehene, parallel zur Wanderrichtung der Hohlform 8 verlaufende, im wesentlichen rechteckige Nut 21 ein. Die Vorderkante der Leiste 33 kommt nun in Eingriff mit der entsprechenden Wandung der Nut 21 und nimmt die Formhälfte mit in Richtung des Pfeiles B in Figur 1 und 3. Um den Stoß beim Beschleunigen der Formhälfte 2, 3 zu verringern, ist die elastisch nachgiebige Lagerung der Leiste 33 vorgesehen. Da sich während des in-Eingriff-kommens die Formhälfte noch mit der Hohlform 8 in Wanderrichtung derselben bewegt, wird der seitlichen Auseinanderführbewegung der Formhälften 2, 3 zunächst noch die Wanderbewegung der Hohlform überlagert. Das heißt, die Formhälften 2, 3 am Ende der Arbeitsstrecke werden zunächst nicht senkrecht zur Wanderrichtung der Hohlform, sondern schräg zu dieser seitlich weggeführt. Durch die Reibung auf der Grundplatte 1 wird nach dem Außereingriffkommen der Formhälften mit der wandernden Hohlform diese Bewegungskomponente in Richtung der Hohlformwanderung rasch abgebremst und im letzten Teil der seitlichen Auseinanderführbewegung bewegt sich die Formhälfte 2, 3 im wesentlichen senkrecht zur Wanderrichtung der Hohlform. Um ein Gleiten der Formhälfte 2, 3 zusammen mit der Hohlform 8 während des Auseinanderfahrens in Richtung der Hohlformbewegung zuzulassen, läßt die Nut 21 eine Verschiebung auf der Leiste 33 in deren Längsrichtung zu. Der Mitnehmer 4 taucht schließlich in der in Figur 3 links noch einmal angedeuteten Position 4a wieder nach unten durch die Grundplatte 1 ab, so daß hier durch die Reibung und, falls erforderlich, durch das Anlaufen der Flanke des Formhälftenunterteils 20 gegen den Positionieranschlag 10 die Formhälfte 2, 3 alsbald zum Stillstand kommt. Die Formhälfte befindet sich hier nun ausgerichtet am Positionieranschlag 10 im Einzugsbereich des entsprechenden Rückförderers 11.

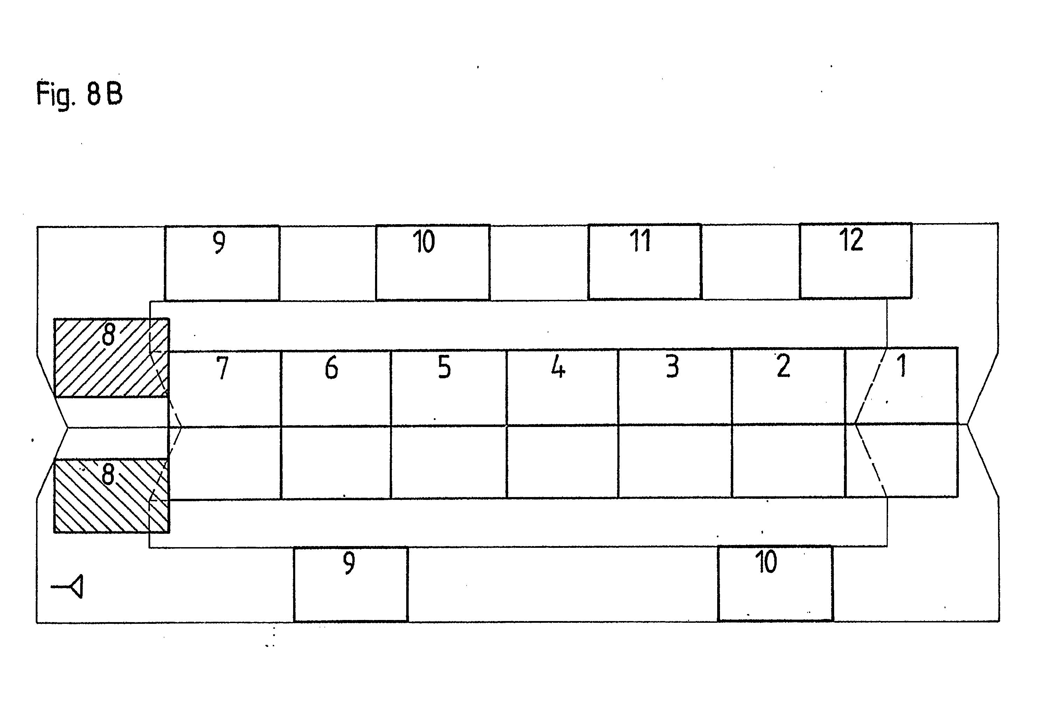

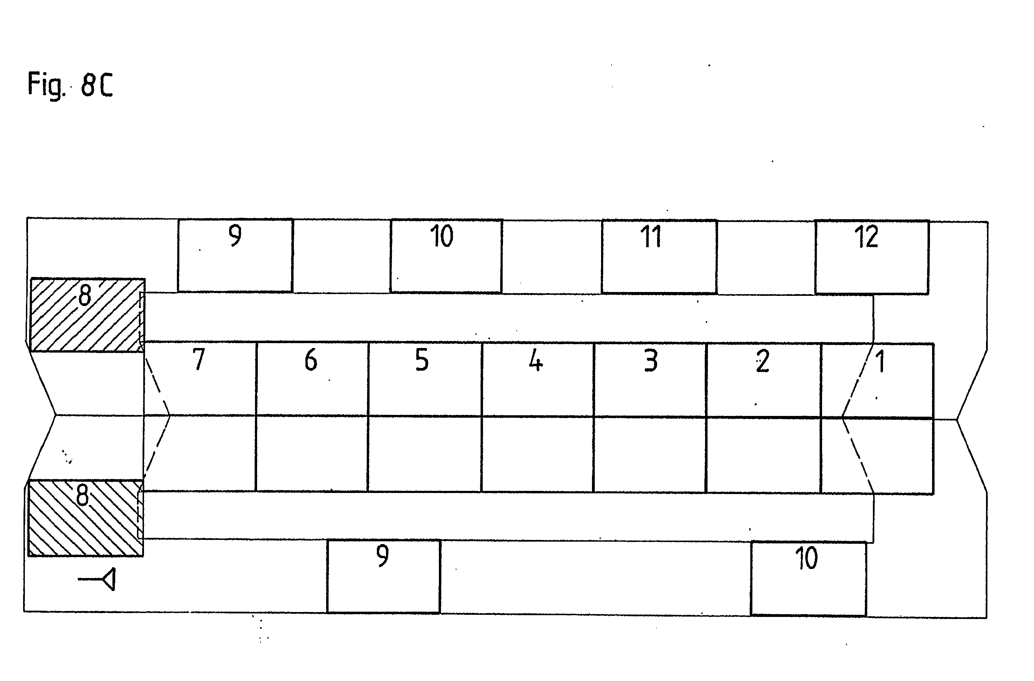

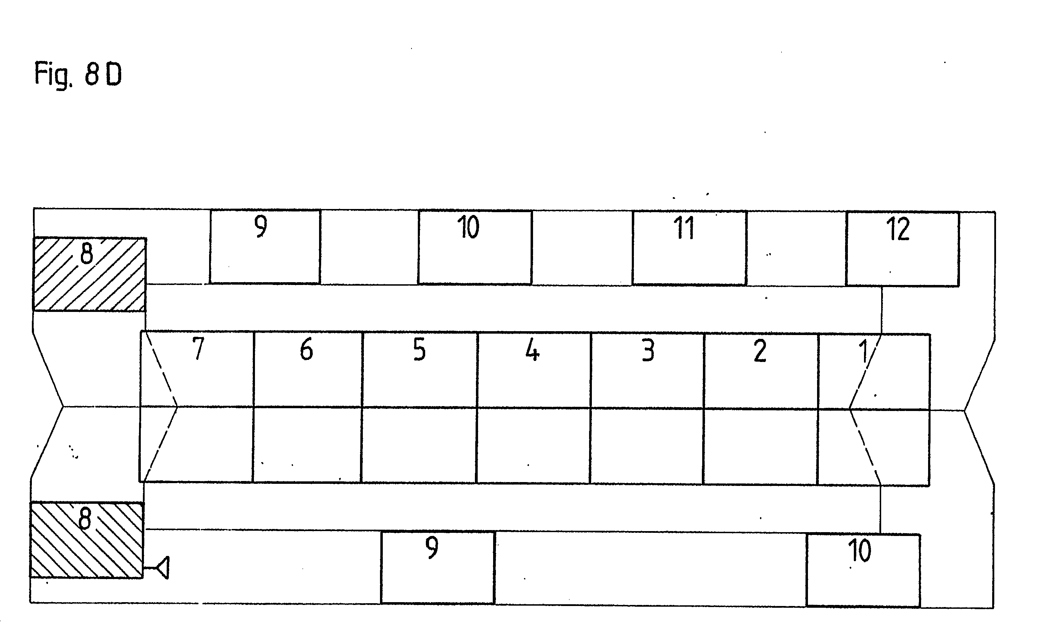

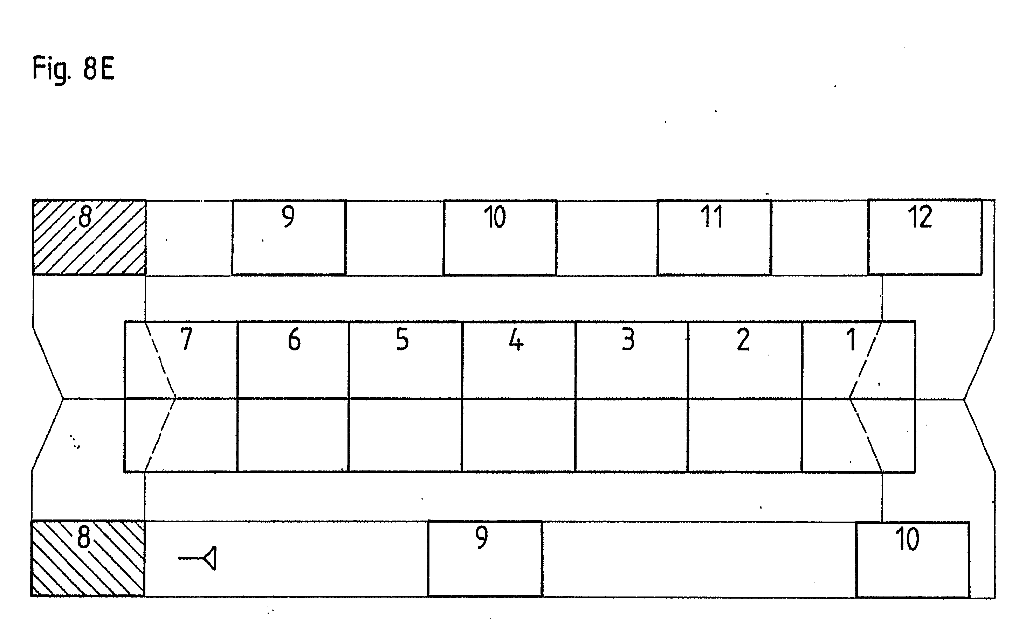

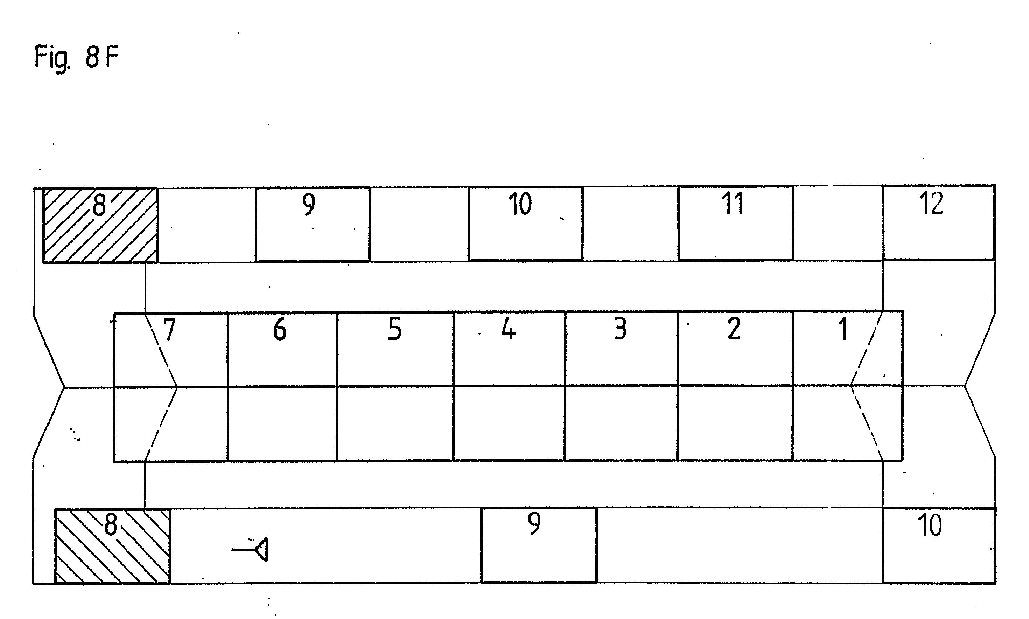

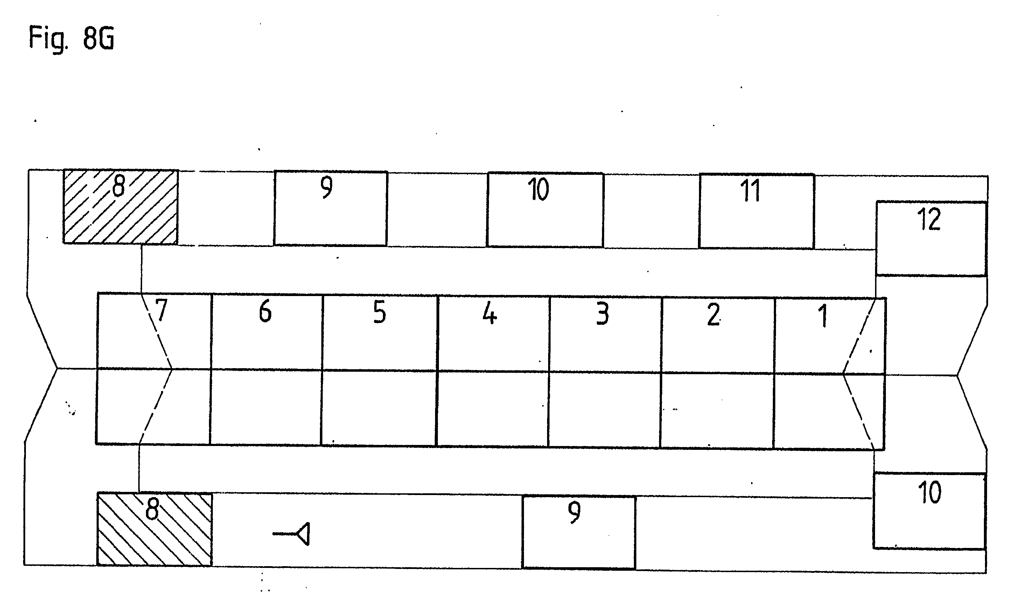

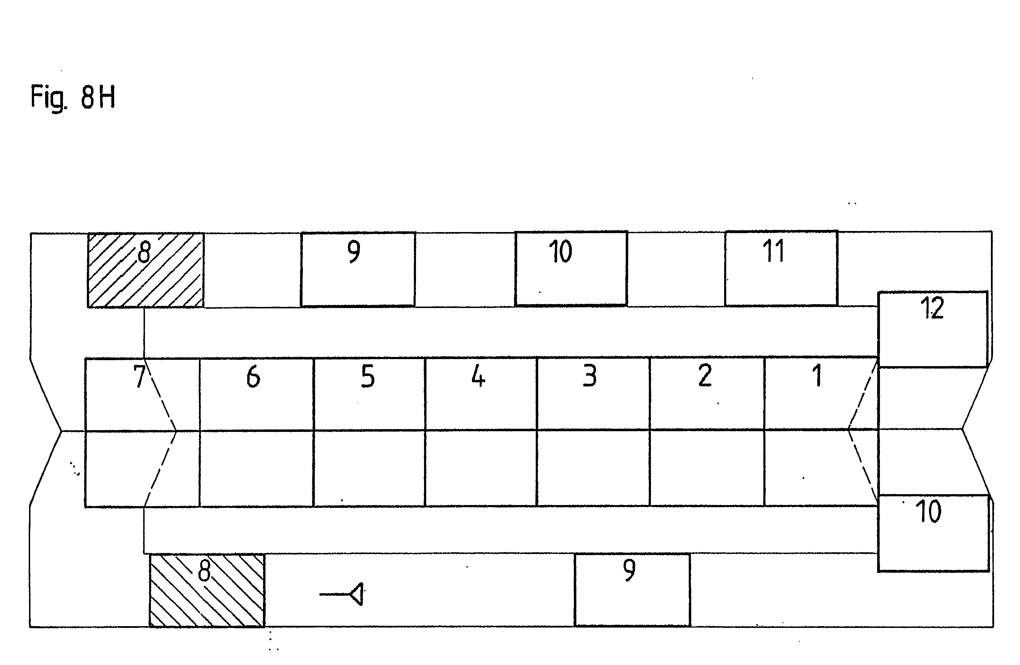

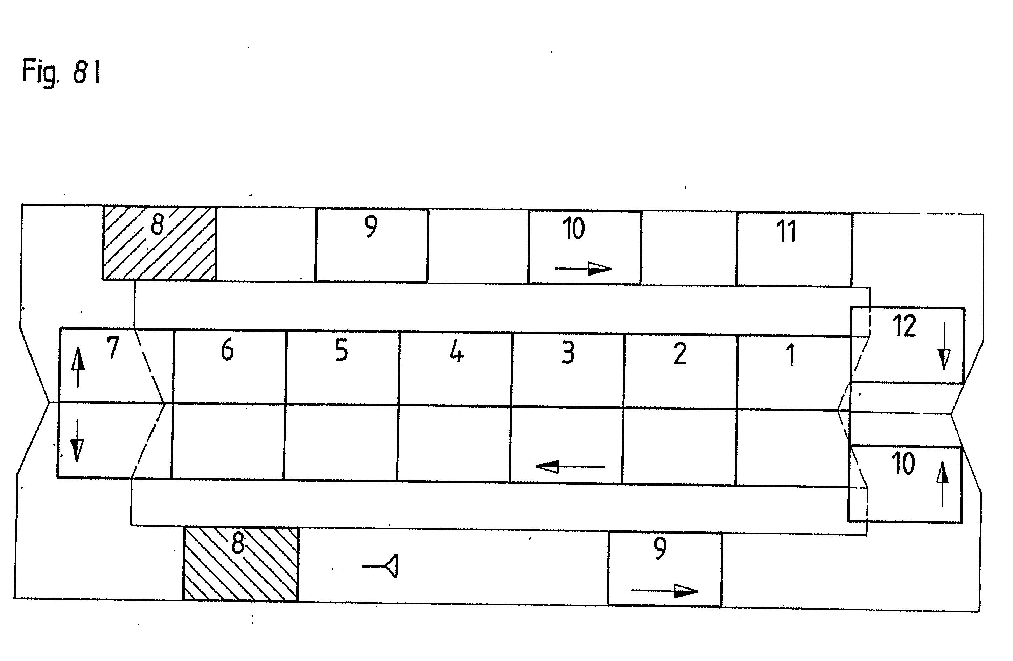

Jeder der beiden Rückförderer 11 besitzt zwei gleiche Kettenräder 40 (Figur 2), über welche eine Laschenkette 41 in einer vertikalen Ebene geführt ist. Die Laschenkette 41 trägt eine der Anzahl der im Abstand voneinander zu fördernden Formhälften 3 bzw. 2 entsprechende Anzahl von Mitnehmern. Soll beispielsweise (gemäß Figur 8 oben) eine Folge von 12 Formhälften vorgesehen sein, von denen sich jeweils acht in der Arbeitsstrecke befinden, so trägt im Beispiel jede Kette 41 neun Mitnehmer 5. Die Mitnehmer 5 des Rückförderers müssen weniger nachgiebig ausgebildet sein als die Mitnehmer 4 und 6 der Querförderer. Zum Rückfördern der Formhälften taucht nun im Bereich des Positionieranschlags 10 durch einen Schlitz 42 der Grundplatte 1, welcher parallel zur Wanderrichtung der Hohlform verläuft, ein Mitnehmer 5 des entsprechenden Rückförderers 11 über die Grundplatte 1 nach oben auf und kommt in Eingriff mit der in Figur 1 und 3 dem Beschauer abgewandten Stirnfläche des entsprechenden Formhälftenunterteils 20. Bei seiner Wanderung auf dem oberen Trum der Kette 41 nimmt der Mitnehmer 5 auf diese Weise die entsprechende Formhälfte mit zurück und fährt sie gegen den Positionieranschlag 13 im Bereich des Beginns der Arbeitsstrecke, wo der Mitnehmer wieder nach unten über dem entsprechenden Kettenrad 40 des Rückförderers 11 abtaucht. Durch den Positionieranschlag 13 wird soweit erforderlich, ein restliches Abbremsen der Formhälfte bewirkt. Bei entsprechender konstruktiver Ausbildung können die Positionieranschläge 10, 13 sogar fehlen.

Während des Rückweges der Formhälfte 2, 3 vom Ende der Arbeitsstrecke zum Beginn derselben ist die Formhälfte jeweils auf einer parallel zur Rückförderrichtung verlaufenden Rippe 12 geführt, auf welcher das Formhälftenunterteil mittels der Nut 21 gleitet und geführt ist. Wie aus Figur 2 ersichtlich, befindet sich der Rückförderer 11 jeweils in größerem Abstand von der wandernden Hohlform 8 als das der wandernden Hohlform abgelegene Kettenumlenkrad 30 des entsprechenden Querförderers 7 am Ende der Arbeitsstrecke. Die Konstruktion ist dabei so gehalten, daß die vertikale Umlaufebene der Kette des Rückförderers 11, die ja parallel zur Trennebene der wandernden Hohlform verläuft, den Massenschwerpunkt der jeweiligen Formhälfte und die Mitte des Mitnehmers 5 enthält. Dadurch treten während der Rückförderung und auch beim Beginn und Ende derselben durch das Zusammenwirken der Formhälfte mit dem Mitnehmer 5 des entsprechenden Rückförderers 11 keine störenden Schwenkmassenkräfte auf.

Damit der Querförderer 7 am Ende der Arbeitsstrecke und der Querförderer 15 am Anfang derselben gleich gebaut sein können, ist der Querförderer 15 am Beginn der Arbeitsstrecke in größerem Abstand von der letzteren angeordnet, als der Querförderer 7. Dadurch wird eine Kollision der Elemente des Querförderers 15, der im übrigen mit dem Querförderer 7 identisch gebaut ist, mit dem Antrieb für die wandernde Hohlform 8 vermieden. Dementsprechend greift der Mitnehmer des Querförderers 15, der ebenso wie der des Querförderers 7 ausgebildet ist, nicht an der Nut 21 an der Unterseite der entsprechenden Formhälfte 2, 3 an, sondern an der der Formtrennfläche abgewandten Rückseite 20A des Formunterteils 20. Das Zusammenwirken des Mitnehmers 6 mit dieser Oberfläche 20a ist in Figur 3 in der rechten Zeichnungshälfte gezeigt. Der Querförderer 15 am Beginn der Arbeitsstrecke bewirkt lediglich eine Querverschiebung senkrecht zur Bewegungsrichtung der wandernden Hohlform 8. Die beiden hier zusammenzuschiebenden und an die Hohlform anzufügenden Formhälften 2 und 3 müssen jedoch im letzten Teil ihrer Schließbewegung zugleich eine Bewegung in Wanderrichtung der Hohlform 8 erhalten, damit sie abstandslos mit dem Formhälftenpaar, an das sie anschließen, weiter wandern und so eine Verlängerung der Hohlform bilden können. Der Mitnehmer 6 des Querförderers 15 läßt ja, da er an der sich parallel zur Wanderrichtung der Hohlform erstreckenden Fläche 20a angreift, eine derartige Bewegung grundsätzlich zu, bevor der Mitnehmer 6 am Ende seiner Mitnehmbewegung beim Aneinanderanstoßen der beiden zusammenwirkenden Formhälften 2, 3 am Beginn der Arbeitsstrecke wieder nach unten unter die Grundplatte 1 abtaucht.

Um das richtige Anfügen der Formhälften 2, 3 an die wandernde Hohlform 8 zu gewährleisten, ist jede Formhälfte 2, 3 an ihrer Vorderfront und Rückfront mit einer Querprofilierung 50, 51 versehen, wobei die vordere Profilierung 50 komplementär zur rückwärtigen Profilierung 51 ausgebildet ist, so daß diese ineinandergreifen können und eine Verriegelung der die wandernde Hohlform 8 bildenden Formhälften 2, 3 in Wanderrichtung bilden. In der Praxis sieht die Konstruktion so aus, daß unten an der in der Hohlform 8 vorauseilenden Stirnwand jedes Formhälftenunterteils eine nach vorn ragende Rippe 50 verläuft, die im Abstand von der Stirnwand nach oben umgebogen ist. Die nacheilende Stirnwand besitzt an ihrer Unterkante eine entsprechende Ausfräsung, die der Rippe 50 mit ihrer Umbiegung nach oben komplementär geformt ist, wie dies in Figur 1 und den Figuren 5 bis 7 gezeigt ist. Werden nun die beiden Formhälften 2 und 3 am Beginn der Arbeitsstrecke zusammengeschoben, so tritt von jeder der beiden zusammengeschoben werdenden Formhälften die Formschlußrippe 50 in die komplementäre Formschlußnut 51 an der nacheilenden Stirnwand des letzten Paares der bis dahin die Hohlform 8 bildenden Formhälften ein, so daß die Hohlform, die an ihr nacheilendes Ende angeschlossen werden beiden Formhälften mitnimmt. Der letzte Teil der Zusammenschiebebewegung der beiden Formhälften erfolgt also noch während diese Formhälften bereits an die Hohlform 8 angehängt sind und von dieser mitgenommen werden. Wenn die beiden Formhälften voll zusammengestoßen sind, treten sie im oberen Bereich in die Führung 24 und im unteren Bereich mit ihren Seitenflächen 20a zwischen die Führungsleisten 25 ein, so daß in der Arbeitsstrecke sich eine fest zusammengehaltene Hohlform bewegt.

Damit die Konstruktion für das "Einfädeln" der Rippe 50 in die Nut 51 am Ende der wandernden Hohlform keine übermäßige Präzision erfordert, sind die entsprechenden Enden der Rippe 50 bei 50 A und der Nut 51 bei 51 A abgeschrägt.

Nachfolgend wird der Antrieb für die Hohlform 8 und für die Rückführeinrichtung 15, 11, 7 beschrieben.

Da die ganzen Transport- und Förderbewegungen synchronisiert sein müssen, wird gemäß der Erfindung der Antrieb für die Rückführeinrichtung vom Antrieb für die Hohlform abgenommen.

Die Hohlform wird in allgemein üblicher und beispielsweise aus der Gebrauchsmusterschrift 1 808 897 bekannten Weise durch eine am Beginn der Arbeitsstrecke angeordnete Zahnradwelle 60 angetrieben, die ein doppeltes Zahnrad 61 trägt, dessen Zähne für das Vorschieben der Hohlform in Wanderrichtung derselben mit einer Verzahnung 62 am Unterteil 20 der jeweiligen Formhälfte 2, 3 zusammenwirkt.

Die Antriebseinrichtung ist in Figur 2 im einzelnen gezeigt. Sie befindet sich im wesentlichen unter der Grundplatte 1, deren äußere Umrisse in Figur 1 bei 64 gezeigt sind.

Die Zahnradwelle 60 wird wie aus Figur 2 ersichtlich, von einem Kegelradplanetengetriebe 66 über dessen Abtriebsritzel 66a und zwei Zwischenzahnräder 63 und 67 angetrieben. Das Kegelradplanetengetriebe 66 wird wiederum von einem Antriebsmotor 65 angetrieben. Soll die Vorrichtung auch für unterschiedliche Rohrgrößen und/oder Geschwindigkeiten geeignet sein, so ordnet man zweckmäßig zwischen dem Antriebsmotor 65 und dem Getriebe 66 ein Schaltgetriebe 68 an, welches es erlaubt, die Maschine mit unterschiedlicher Geschwindigkeit anzutreiben.

Die beiden Ritzel 61 der Zahnradwelle 60 treiben über Zwischenzahnräder 69, 70, 73 das Antriebszahnrad 71 der Antriebswelle 72 für die beiden Rückförderer 11 der Vorrichtung an. Die Welle 72, die im Maschinengestell in geeigneter Weise gelagert ist, trägt an ihren beiden Enden je eines der gleichen Umlenkräder 40 an den beiden Enden der Rückförderer 11. Am Beginn der Rückförderer sind leer mitlaufende Kettenräder vorgesehen, über welche die Ketten 41 der Rückförderer geführt sind. Auf diese Weise sind die beiden Rückförderer genau synchron angetrieben und die Relation zwischen der Position jedes Mitnehmers auf einer der Rückfördererketten relativ zum übrigen Antriebsmechanismus und der Lage der Formhälften 2, 3 ist genau festgelegt.

Soll die Vorrichtung auch mit unterschiedlichen Formhälftenzahlen in jeder Formhälftenfolge arbeiten, so ist zwischen das Zahnrad 69 und das Zahnrad 71 auf der Antriebswelle für die beiden Rückförderer ein Schaltgetriebe 75 geschaltet, welches es erlaubt, je nach der Anzahl der von den Rückförderern 11 gleichzeitig zu fördernden Formhälften 2, 3 mit unterschiedlichen Arbeitsgeschwindigkeiten zu fahren.

Zum Antrieb der beiden Querförderer 15 am Beginn der Arbeitsstrecke dienen zwei gleiche Kegelradgetriebe 80, die in gleicher Weise über Zahnräder 69, 73 mit gleichem Übersetzungsverhältnis durch die Antriebsritzel 61, wie aus Figur 2 ersichtlich, angetrieben sind. Die Abtriebswelle jedes Kegelradgetriebes 80 trägt das der Hohlform nahegelegene Kettenrad 82 des Querförderers 15, so daß die beiden Querförderer 15 stets mit zu der Wandergeschwindigkeit der Hohlform in einem festen Verhältnis stehenden Geschwindigkeit angetrieben werden.

Der Antrieb der beiden Querförderer 7 am Ende der Arbeitsstrecke wird von der Verzahnung an der Unterseite der wandernden Hohlform abgenommen. Zu diesem Zweck ist unterhalb der Grundplatte 1 im Bereich jeder der beiden "Zahnstangen" 62 an der Unterseite der Hohlform ein Ritzel 90 gelagert, welches über ein Zwischenritzel 91 wiederum ein Kegelradgetriebe 80 antreibt. Auf dessen Abtriebswelle sitzt wiederum jeweils das getriebene Kettenrad 30 des Querförderers 7 am Ende der Arbeitsstrecke. Auf diese Weise ist auch hier eine einwandfreie Synchronisierung des Querfördererantriebs mit dem Antrieb für die wandernde Hohlform gewährleistet.

Im gezeigten Ausführungsbeispiel soll die Vorrichtung einmal mit 12 Formhälften in jeder Folge, zum anderen aber auch mit 10 Formhälften in jeder Folge gefahren werden können. Da dann die Zahl der bei 12 Formhälften in der Zeiteinheit vom Rückförderer zurückzufördernden Formhälften doppelt so groß ist, wie bei nur 10 Formhälften, sofern sich immer acht Formhälften im Bereich der Arbeitsstrecke befinden, ist das Schaltgetriebe 75 für zwei unterschiedliche Übersetzungsverhältnisse ausgelegt, von denen das eine doppelt so groß ist wie das andere.

Der Arbeitsablauf für diese beiden Betriebsmöglichkeiten, die wenn beispielsweise jede Formhälfte eine Länge von einem 1/2 m hat, die Herstellung von unterschiedlichen Rohren mit 5 m Länge und 6 m Länge erlaubt ( es können natürlich auch beispielsweise Rohre von 3 m und 2,5 m Länge hergestellt werden), ist in Figur 8A bis 8I näher gezeigt. Hierbei ist in der oberen Hälfte der Zeichnung jeweils der Betrieb bei 12 Formhälften in jeder Folge und in der unteren Hälfte der Betrieb mit 10 Formhälften in jeder Folge gezeigt. Die Arbeitsrichtung sei in diesen Figuren von rechts nach links; d.h. rechts ist der Beginn der Arbeitsstrecke und links das Ende derselben. Geht man einmal von dem in Figur 8A gezeigten Zustand aus und betrachtet dort jeweils die beiden hier die Nr. 8 tragenden Formhälften, so erkennt man, daß diese zunächst von den Querförderern 7 unter Beibehaltung der Wandergeschwindigkeit der Hohlform auseinandergefahren werden, um dann in die Wartepositionen an den entsprechenden Ecken der Grundplatte 1 zu gelangen, wie dies in Figur 8E gezeigt ist. Von hier werden diese nun nach sehr kurzer Wartezeit in der Größenordnung eines Bruchteils einer Sekunde (man erkennt dies daran, daß der Abstand zwischen der Formhälfte 8 und der Formhälfte 9 in Figur 8E nur ganz wenig geringer ist, als der Abstand zwischen den Formhälften 9 und 10) von einem Mitnehmer des entsprechenden Rückförderers erfaßt und in einem der Teilung dieser Mitnehmer entsprechenden Abstand von der vorhergehenden Formhälfte 9 zurückgefördert. Dieses Spiel wiederholt sich synchron am Ende der Arbeitsstrecke. Ist wie in Figur 8F gezeigt, die in Rückförderrichtung vorderste Formhälfte 12 bzw. 10 in der Warteposition am Beginn der Arbeitsstrecke angelangt, so wird diese Formhälfte alsbald vom entsprechenden Querförderer 15 erfaßt und an den Beginn der Arbeitsstrecke geschoben, wie dies oben bereits im einzelnen beschrieben wurde.

Da die Fördergeschwindigkeiten der Querförderer starr an die Wandergeschwindigkeit der Hohlform gekoppelt sind, muß wie dies aus obigem ersichtlich ist, der Rückförderer dann, wenn statt 10 Formhälften 12 Formhälften sich in der Folge befinden, in der Zeiteinheit oder genauer gesagt, in einem entsprechenden Arbeitstakt des Hohlformantriebs doppelt so viele Formhälften zurückfördern, wie bei nur 10 Formhälften in der Folge, er muß daher auch doppelt so schnell laufen.

Figur 8A bis 8I zeigen den Zustand der wandernden Formhälften jeweils in im wesentlichen gleichen Zeitabständen, d.h. also auf die Figur 8I folgt dann wieder die Figur 8A.

## Patentansprüche

1. Vorrichtung zum fortlaufenden Erzeugen von Rohren mit querprofilierter Wandung aus einem in noch plastischem Zustand aus einer Extrusionsdüse austretenden Rohrstrang aus thermoplastischem Kunststoff mit zwei in endlosen Bahnen bewegten Folgen von Formhälften (2, 3), die längs einer auf die Extrusionsdüse folgenden geraden Arbeitsstrecke einander paarweise zu einer wandernden Hohlform (8) für die Profilierung der Rohrwandung ergänzend nebeneinander herlaufen, und mit einer Rückführeinrichtung (7, 11, 15), welche jeweils am Ende der Arbeitsstrecke die angekommenen Formhälften (2, 3) quer zur Arbeitsstrecke auseinander in Positionen neben dem Ende der Arbeitsstrecke führt, die Formhälften (2, 3) dann in innerhalb der Folge nicht miteinander verbundenem Zustand mittels längs der Arbeitsstrecke im Abstand von dieser verlaufender Rückförderer (11) in Positionen neben dem Anfang der Arbeitsstrecke zurückfördert und sie von dort wieder an den Anfang der Hohlform ansetzt, wobei sich mehrere Formhälften (2, 3) jeder Folge gleichzeitig im Rückförderer (11) befinden können, wobei die Folgen von Formhälften auf einer waagerechten Unterlage geführt umlaufen und die Rückführeinrichtung für jede Formhälftenfolge (2, 3) am Anfang und Ende der Arbeitsstrecke einen Querförderer (15, 7) besitzt, um die Formhälften (2, 3) jeweils aus der Position neben dem Anfang der Arbeitsstrecke an den Anfang der Hohlform (8), bzw. vom Ende der Hohlform in die Position neben dem Ende der Hohlform zu fördern, dadurch gekennzeichnet, daß die Förderer (7, 11, 15) jeweils unterhalb des Formhälftenweges ein endloses Zugglied (41, 31) mit einem in Förderrichtung des jeweiligen Förderers umlaufenden Trum besitzen, daß die Zugglieder Mitnehmer (4, 5, 6) tragen, die am Beginn des Förderweges mit den Formhälften (2, 3) in Eingriff kommen, diese mitnehmen und am Ende des Förderweges wieder außer Eingriff mit den Formhälften kommen können, und daß Führungsleisten (12) zum Parallelführen der Formhälften im Bereich der Rückführeinrichtung vorgesehen sind.

2. Vorrichtung nach Anspruch 1, dadurch gekennzeichnet, daß die Positionen neben dem Anfang und Ende der Arbeitsstrecke als Wartepositionen ausgebildet sind, in welchen die Formhälften vom Rückförderer (11) bzw. Querförderer (7) stehengelassen werden, bevor sie kurzzeitig danach vom Querförderer (15) bzw. Rückförderer (11) erfaßt und dem Anfang der Hohlform bzw. der Position neben dem Anfang der Arbeitsstrecke zugeführt werden.

3. Vorrichtung nach Anspruch 1 und 2, dadurch gekennzeichnet, daß die Zugglieder (41, 31) Ketten sind.

4. Vorrichtung nach einem der Ansprüche 1 bis 3, dadurch gekennzeichnet daß die Mitnehmer (4, 6) der Querförderer senkrecht zur Förderrichtung derselben (also parallel zur Arbeitsstrecke) verlaufende Leisten sind, welche mit entsprechend verlaufenden Anschlagflächen der Formhälften zusammenwirken und letztere während des Querförderweges in ihrer Parallellage führen.

5. Vorrichtung nach einem der Ansprüche 1 bis 4, dadurch gekennzeichnet, daß die Mitnehmer der Querförderer (7) an den Enden der Arbeitsstrecke mit den Flanken von an den Unterseiten der Formhälften (2, 3) vorgesehenen Nuten (21) und die Mitnehmer der Querförderer (15) am Anfang der Arbeitsstrecke mit den der Hohlform (8) abgewandten Oberflächen der Formhälften (2, 3) zusammenwirken.

6. Vorrichtung nach einem der Ansprüche 1 bis 5, dadurch gekennzeichnet, daß die Mitnehmer (4, 6) wenigstens der Querförderer in Förderrichtung elastisch nachgebend an ihren Zuggliedern (31) befestigt sind.

7. Vorrichtung nach einem der Ansprüche 1 bis 6, dadurch gekennzeichnet, daß die Formhälften im Bereich der Rückförderer (11) an in Förderrichtung verlaufenden Führungsleisten (12) der Unterlage geführt sind.

8. Vorrichtung nach einem der Ansprüche 1 bis 7, dadurch gekennzeichnet, daß jeweils am Ende des Förderweges – ausgenommen am Beginn der Hohlform– Positionieranschläge (10, 13) für die Formhälften (2, 3) vorgesehen sind.

9. Vorrichtung nach einem der Ansprüche 1 bis 8, dadurch gekennzeichnet, daß die Formhälften (2, 3) jeder Folge an ihren in der Arbeitsstrecke an der vorauseilenden und der nacheilenden Formhälfte (2, 3) anliegenden Stirnflächen ineinandergeschobene, komplementär geformte Querrippen (50) bzw. -nuten (51) tragen, welche die Formhälften (2, 3) jeder Folge während des Zusammenschiebens am Anfang der Arbeitsstrecke an der in der Arbeitsstrecke starr geführten (24, 25) Hohlform (8) führen.

10. Vorrichtung nach einem der Ansprüche 6 bis 9, dadurch gekennzeichnet, daß die vier Querförderer (7, 15) gleich ausgebildet sind, daß die Querförderer (15) am Beginn der Arbeitsstrecke um ein dem Abstand der Nuten (21) an der Unterseite der Formhälften (2, 3) von den der Hohlform abgewandten Seitenflächen der Formhälften (2, 3) entsprechendes Maß weiter seitlich von der Arbeitsstrecke ab liegen als die Querförderer (7) am Ende der Arbeitsstrecke, daß die an den in Arbeitsrichtung vorderen Stirnflächen der Formhälften (2, 3) mit ihren Mitnehmern (5) angreifenden Rückförderer (11) in geringerem seitlichem Abstand von der Arbeitsstrecke angeordnet sind als die der Arbeitsstrecke abgelegenen Umlenkräder der Querförderer (15) am Beginn der Arbeitsstrecke, daß der jeweils am Ende der Arbeitsstrecke liegende Anfang der Rückförderer (11) weiter vom zugehörigen Querförderer (15) am Beginn der Arbeitsstrecke ab liegt, als der Querförderer (7) am Ende der Arbeitsstrecke, und daß letzterer jeweils zwischen der Arbeitsstrecke und dem zugehörigen Rückförderer (11) liegt.

11. Vorrichtung nach einem der Ansprüche 1 bis 10, dadurch gekennzeichnet, daß die Hohlform mittels einer am Anfang der Arbeitsstrecke angeordneten Zahnradwelle angetrieben wird, die mit einer Verzahnung an der Unterseite der Formhälften zusammenwirkt, und daß die Verzahnung (62) der Formhälften (2, 3) über eine Zahnradanordnung (91, 80) am Ende der Arbeitsstrecke die dortigen Querförderer (7) antreibt.

12. Vorrichtung nach einem der Ansprüche 1 bis 11, dadurch gekennzeichnet, daß die Rückführeinrichtungen für Aufnahme und Transport unterschiedlicher Zahlen von Formhälften (2, 3) ausgebildet sind.

13. Vorrichtung nach Anspruch 12, dadurch gekennzeichnet, daß das Verhältnis der Umlaufgeschwindigkeit der Rückförderer (11) zu der der Querförderer (7, 15) einstellbar ist, und daß die Mitnehmer (5) des Rückförderers in unterschiedlicher Zahl und unterschiedlichem Abstand auf dessen Zugglied (41) befestigbar oder aber in unterschiedlichen Anzahlen von Formhälften (2, 3) entsprechenden Abständen auf den Zuggliedern (41) sitzt.

14. Vorrichtung nach Anspruch 12 oder 13, dadurch gekennzeichnet, daß die Hohlform mittels einer am Anfang der Arbeitsstrecke angeordneten Zahnradwelle angetrieben wird, die mit einer Verzahnung an der Unterseite der Formhälften zusammenwirkt, und daß ein gemeinsam und synchron mit der Zahnradwelle angetriebenes Schaltgetriebe (75) die Zugglieder (41) der Rückförderer (11) mit wählbarer Geschwindigkeit antreibt, während die Querförderer (7, 15) in unveränderbarem Übersetzungsverhältnis zur Zahnradwelle (60) angetrieben sind.

**Claims**

1. Apparatus for continuously producing pipes with cross-profiled walling from a pipe strand of thermoplastic material emerging in a still plastic state from an extrusion die, having two series of mould halves (2, 3) which are moved in endless paths along a straight working zone following the extrusion die, run next to each other, complementing each other as a pair to form a travelling hollow mould (8) for the profiling of the pipe walling; and having a returning device (7, 11, 15) which at the end of the working zone in each case leads the arriving mould halves (2, 3) apart transversely to the working zone into positions next to the end of the working zone, then conveys the mould halves (2, 3) in unconnected state within the series by means of return conveyors (11) running along the working zone at a distance from it back into positions next to the beginning of the working zone and from there positions them back at the beginning of the hollow mould, it being possible for a plurality of mould halves (2, 3) of each series to be in the return conveyor (11) at the same time, the series of mould halves circulating while guided on a horizontal underlay and the returning device having for each mould half series (2, 3) a transverse conveyor (15, 7) at the beginning and end of the working zone, in order to convey the mould halves (2, 3) in each case out of the position next to the beginning of the working zone to the beginning of the hollow mould (8), or from the end of the hollow mould into the position next to the end of the hollow mould, respectively; characterized in that the conveyors (7, 11, 15) have in each case underneath the route of the mould halves an endless drawing member (41, 31) with a stringer circulating in conveying direction of the respective conveyor; in that the drawing members bear catches (4, 5, 6) which come into engagement with the mould halves (2, 3) at the beginning of the conveying route, take them along and come out of engagement with the mould halves again at the end of the conveyins route; and in that guide bars (12) are provided for the parallel guiding of the mould halves in the region of the returning device.

2. Apparatus according to Claim 1, characterized in that the positions next to the beginning and end of the working zone are designed as waiting positions, in which the mould halves are left standing by the return conveyor (11) or transverse conveyor (7) before they are picked up a short time thereafter by the transverse conveyor (15) or return conveyor (11) and fed to the beginning of the hollow mould or to the position next to the beginning of the working zone.

3. Apparatus according to Claims 1 and 2, characterized in that the drawing members (41, 31) are chains.

4. Apparatus according to one of Claims 1 to 3, characterized in that the catches (4, 6) of the transverse conveyors are bars running perpendicular to the conveying direction of the same (that is to say parallel to the working zone), which interact with correspondingly running stop surfaces of the mould halves and guide the latter in their parallel position during the transverse conveying route.

5. Apparatus according to one of Claims 1 to 4, characterized in that the catches of the transverse conveyors (7) interact at the ends of the working zone with the flanks of grooves (21) provided on the undersides of the mould halves (2, 3), and the catches of the transverse conveyors (15) at the beginning of the working zone interact with the surfaces of the mould halves (2, 3) facing away from the hollow mould (8).

6. Apparatus according to one of Claims 1 to 5, characterized in that the catches (4, 6), at least of the transverse conveyors, are fastened flexibly compliantly in conveying direction to their drawing members (31).

7. Apparatus according to one of Claims 1 to 6, characterized in that the mould halves are guided in the region of the return conveyors (11) against guide bars (12) of the underlay, which run in conveying direction.

8. Apparatus according to one of Claims 1 to 7, characterized in that positioning stops (10, 13) for the mould halves (2, 3) are provided in each case at the end of the conveying route – except at the beginning of the hollow mould.

9. Apparatus according to one of Claims 1 to 8, characterized in that the mould halves (2, 3) of each series have on their end faces, lying against the leading and trailing mould halves (2, 3) in the working zone, complementarily shaped transverse ribs (50) and grooves (51) which are pushed one into the other and guide the mould halves (2, 3) of each series during the pushing together at the beginning of the working zone against the hollow mould (8) rigidly guided (24, 25) in the working zone.

10. Apparatus according to one of Claims 6 to 9, characterized in that the four transverse conveyors (7, 15) are identically designed; in that the transverse conveyors (15) at the beginning of the working zone lie further away to the side of the working zone than the transverse conveyors (7) at the end of the working zone, by an amount corresponding to the distance of the grooves (21) on the underside of the mould halves (2, 3) from the side faces, facing away from the hollow mould, of the mould halves (2, 3); in that the return conveyors (11), acting with their catches (5) against what in working direction are the front end faces of the mould halves (2, 3), are arranged at a smaller lateral distance from the working zone than the deflection wheels, remote from the working zone, of the transverse conveyors (15) at the beginning of the working zone; in that the beginning of the return conveyors (11) respectively lying at the end of the working zone lies further away from the associated transverse conveyor (15) at the beginning of the working zone than the transverse conveyor (7) at the end of the working zone; and in that the latter in each case lie between the working zone and the associated return conveyor (11).

11. Apparatus according to one of Claims 1 to 10, characterized in that the hollow mould is driven by means of a pinion spindle which is arranged at the beginning of the working zone and interacts with a toothing on the underside of the mould halves; and in that the toothing (62) of the mould halves (2, 3) drives the transverse conveyors (7) at the end of the working zone via a gear wheel arrangement (91, 80) there.

12. Apparatus according to one of Claims 1 to 11, characterized in that the returning devices are designed for receiving and transporting different numbers of mould halves (2, 3).

13. Apparatus according to Claim 12, characterized in that the ratio of the circulating speed of the return conveyors (11) to that of the transverse conveyors (7, 15) can be set; and in that the catches (5) of the return conveyor can be fastened in varying number and varying spacing on its drawing member (41) or else are seated on the drawing members (41) at spacings corresponding to varying numbers of mould halves (2, 3).

14. Apparatus according to Claim 12 or 13, characterized in that the hollow mould is driven by means of a pinion spindle which is arranged at the beginning of the working zone and interacts with a toothing on the underside of the mould halves; and in that a control mechanism (75) driven jointly and synchronously with the pinion spindle drives the drawing members (41) of the return conveyors (11) at selectable speed, while the transverse conveyors (7, 15) are driven at an invariable transmission ratio with respect to the pinion spindle (60).

**Revendications**

1. Dispositif pour l'obtention continue de tubes à paroi profilée transversalement à partir d'un cordon tubulaire en matériau thermo-plastique sortant d'une buse d'extrusion à l'état encore plastique, du type comportant deux séries de demi-moules (2, 3) se déplaçant suivant un enchaînement sans fin, qui le long d'une course de travail suivant immédiatement la buse d'extrusion, se réunissent par paires, vers un moule creux, en déplacement (8) pour le profilage de la paroi du tube en se complétant l'un contre l'autre et un dispositif de retour (7, 11, 15) qui, à chaque fois à l'extrémité de la course de travail conduit les demi-moules (2, 3) qui se présentent transversalement à la course de travail en les séparant dans des positions voisines de l'extrémité de la course de travail, les demi-moules (2, 3) suivants au milieu de la série à l'état non réuni ensemble étant maintenus écartés le long de la course de travail au moyen d'un transporteur de retour (11) dans des positions situées vers le début de la course de travail et, de de là, retournés au début du moule creux, de sorte que plusieurs demi-moules (2, 3) de chaque série peuvent se trouver simultanément dans le transporteur de retour (11), et dans lequel les séries de demi-moules se déplacent sur un bâti horizontal et le dispositif de retour pour chaque série de demi-moules (2, 3) comporte un transporteur transversal au début et à la fin de la course de travail en vue de transporter les demi-moules (2, 3) chaque fois depuis la position voisine du début de la course de travail jusqu'au début du moule (8) ou encore depuis la fin du moule creux jusqu'à la position voisine de la fin de la course de travail caractérisé en ce que les transporteurs (7, 11, 15) comportent chacun à mi-chemin du parcours des demi-moules un organe de traction sans fin (41, 31) percé d'un canal s'étendant dans la direction du transporteur considéré, les organes de traction portent des taquets d'entraînement (4, 5, 6) qui, au commencement du trajet du transporteur viennent attaquer les demi-moules (2, 3), pour les entraîner et à la fin du trajet du transporteur peuvent venir à nouveau attaquer les demi-moules et des rebords de guidage (12) sont prévus pour guider parallèlement les demi-moules dans la zone du dispositif de retour.

2. Dispositif selon la revendication 1, caractérisé en ce que les positions voisines du début et de la fin de la course de travail sont conçues comme positions d'attente dans lesquelles les demi-moules sont abandonnées par le transporteur de retour (11) ou le transporteur transversal (7) avant d'être peu après repris par le transporteur transversal (15) ou le transporteur de retour (11) et ramenés au début du moule creux ou à la positions voisine du début de la course de travail.

3. Dispositif selon les revendications 1 et 2, caractérisé en ce que les organes de traction (41, 31) sont des chaînes.

4. Dispositif selon l'une des revendications 1 à 3, caractérisé en que les taquets d'entraînement (4, 6) du transporteur transversal sont perpendiculaires à la direction de transport, donc parallèle à la course de travail des rebords de guidage, qui coopèrent avec des surfaces d'appui correspondantes des demi-moules et guident ces derniers dans leurs emplacements parallèles au cours du trajet du transporteur transversal.

5. Dispositif selon l'une quelconque des revendications 1 à 4, caractérisé en que les taquets d'entraînement (4, 6) du transporteur transversal (7) coopèrent à la fin de la course de travail avec les flancs de rainures (21) prévues sur la face inférieure des demi-moules (2, 3) et les taquets d'entraînement du transporteur transversal (15) coopèrent au début de la course de travail avec les surfaces supérieures appliquées au moule creux (8) par les demi-moules (2, 3).

6. Dispositif selon l'une quelconque des revendications 1 à 5, caractérisé en que les taquets d'entraînement (4, 6) sont fixés à leurs organes de traction (31) de manière souple et élastique au moins dans la direction de transport du transporteur transversal.

7. Dispositif selon l'une des revendications 1 à 6, caractérisé en que les demi-moules sont guidés dans la zone du transporteur de retour (11) sur les rebords de guidage (12) du bâti.

8. Dispositif selon l'une des revendications 1 à 7, caractérisé en que, à chaque extrémité du trajet de transport, à l'exception du début du moule creux sont prévues des butées de positionnement (10, 13) pour les demi-moules (2, 3).

9. Dispositif selon l'une des revendications 1 à 8, caractérisé en que les demi-moules (2, 3) menants et menés de chaque série, portent sur leurs faces frontales sur la course de travail des nervures (50) et des rainures (51) transversales complémentaires coulissant les unes dans les autres, qui guident les demi-moules (2, 3) de chaque série au cours de coulissement mutuel au début de la course de travail au moule creux rigide (24, 25).

10. Dispositif selon l'un des revendications 6 à 9, caractérisé en ce que les quatre transporteurs transversaux (7, 15) sont constitués de telle manière que le transporteur (15) au début de la course de travail est situé à une distance des rainures (21) de la face inférieure des demi-moules (2, 3) sur le côté de la course de travail, plus grande que le transporteur (7) à la fin de la course de travail, en ce que les faces frontales avant des demi-moules (2, 3) dans la direction du travail avec leurs taquets (5) coopérant avec le transporteur (11) sont à une distance latérale de la course de travail plus petite que les roues d'entraînement du transporteur (15) au début de la course de travail, en ce que, à chaque extrémité de la course de travail, le point de départ du transporteur de retour (11) est plus éloigné du transporteur transversal (15) au début de la course de travail que le transporteur transversal (7) à la fin de la course de travail et en ce que ce dernier est à chaque fois situé entre la course de travail et le transporteur de retour (11) correspondant.

11. Dispositif selon l'une des revendications 1 à 10, caractérisé en ce que le moule creux est entraîné au moyen d'une vis sans fin coopérant avec un engrenage pratiqué dans la face inférieur des demi-moules et en ce que l'engrenage (62) des demi-moules (2, 3) entraîne le transporteur transversal (7) situé à la fin de la course de travail par un système à crémaillère (91, 80).

12. Dispositif selon l'une des revendications 1 à 11, caractérisé en ce que l'installation de retour est prévue pour la réception et le transport de différentes quantités de demi-moules (2, 3).

13. Dispositif selon la revendication 12, caractérisé en ce que le rapport entre la vitesse de circulation du transporteur de retour (11) et celle des transporteurs transversaux (7, 15) est réglable et en ce que les taquets (5) du transporteur de retour sont en nombre variable et peuvent être fixés à des distances variables sur l'organe de traction (41), ou encore, dans le cas d'un nombre variable de demi-moules (2, 3) à des distances correspondantes sur l'organe de traction (41).

14. Dispositif selon l'une des revendications 12 et 13, caractérisé en ce que le moule creux est entraîné par une vis sans fin disposée au début de la course de travail et qui coopère avec un engrenage situé sur la face inférieure des demi-moules et en ce que un mécanisme distributeur (75) entraîné en commun et en synchronisme avec la vis sans fin, entraîne les organes de traction (41) et le transporteur de retour (11) à une vitesse choisie à volonté, tandis que les transporteurs transversaux (7, 15) sont entraînés dans un rapport de transmission non modifiable avec la vis sans fin (60).

Fig. 1

# Fig. 2

EP 0 270 694 B1

# Fig. 3

EP 0 270 694 B1

Fig. 4

Fig. 5

20

20 A

21

62

EP 0 270 694 B1

Fig. 6

Arbeitsrichtung

20

50

21

62

51

51 A

EP 0 270 694 B1

Fig. 7

50 A

◁ Arbeitsrichtung

20

51

50

51 A

EP 0 270 694 B1

Fig. 8 A

| 9 | | 10 → | | 11 | | 12 | |
|---|---|---|---|---|---|---|---|

Folge mit
12 Formbackenhälften

| 8 | 7 | 6 | 5 ← | 4 | 3 | 2 | 1 |
|---|---|---|---|---|---|---|---|

| 9 → | | | 10 | |
|---|---|---|---|---|

Folge mit
10 Formbackenhälften

EP 0 270 694 B1

Fig. 8 B

Fig. 8C

EP 0 270 694 B1

Fig. 8 D

EP 0 270 694 B1

Fig. 8E

| 8 | | 9 | | 10 | | 11 | | 12 |

| 7 | 6 | 5 | 4 | 3 | 2 | 1 |

| 8 | | 9 | | 10 |

EP 0 270 694 B1

Fig. 8 F

EP 0 270 694 B1

Fig. 8G

Fig. 8H

EP 0 270 694 B1

Fig. 81